# EUROPEAN PATENT APPLICATION

(11) **EP 3 196 215 A1**
(43) Date of publication of application: **26.07.2017**
(21) Application number: 15841665.1
(22) Date of filing: 08.09.2015
(51) Int. Cl.: C08F 2/44, C09K 19/38, G02B 5/30

(54) **POLYMERIZABLE COMPOSITION AND FILM USING SAME**

(30) Priority: 19.09.2014 JP 2014191246
(71) Applicant: DIC Corporation, Tokyo 174-8520 (JP)
(72) Inventor: ENDO, Kouichi, Kitaadachi-gun Saitama 362-8577 (JP); YAMAMOTO, Mika, Kitaadachi-gun Saitama 362-8577 (JP); HATSUSAKA, Kazuaki, Kitaadachi-gun Saitama 362-8577 (JP)
(74) Representative: Adam, Holger
(86) International application number: PCT/JP2015/075409
(87) International publication number: WO 2016/043087

(57) **Abstract**

The present invention provides a polymerizable liquid crystal composition containing at least one polymerizable liquid crystal compound (I) having one polymerizable functional group in its molecule, at least one polymerizable liquid crystal compound (II) having two polymerizable functional groups in its molecule, and at least one compound (III) having tree or more aromatic rings at least one of which is substituted by an alkyl group having 1 to 5 carbon atoms or an alkoxy group having 1 to 5 carbon atoms. Also, the present invention provides an optically anisotropic body using the polymerizable liquid crystal composition of the present invention.

## Description

### Technical Field

The present invention relates to a polymerizable liquid crystal composition useful as a constituent member of an optically anisotropic body used for optical compensation and viewing angle compensation of a liquid crystal device, a display, an optical component, a coloring agent, security marking, a member for laser emission, a liquid crystal display, or the like, and also relates to an optically anisotropic body, a retardation film, a patterned retardation film, a brightness enhancement film, and an antireflection film each including the composition.

### Background Art

A polymerizable liquid crystal composition is useful as a constituent member of an optically anisotropic body, and the optically anisotropic body is applied as, for example, a polarization film and a retardation film for various liquid crystal displays. The polarization film and retardation film are produced by applying the polymerizable liquid crystal composition on a substrate, drying a solvent to form a coating film, and then curing the polymerizable liquid crystal composition by heating or active energy ray irradiation in a state in which the polymerizable liquid crystal composition is aligned by using an alignment film or the like. It is also known that a circular polarization splitter can be produced by using a polymerizable cholesteric liquid crystal composition containing a chiral compound added to the polymerizable liquid crystal composition, and application to a brightness enhancement film and the like is investigated.

When used as a constituent member of an optically anisotropic body, a coating film is required to have heat resistance, and thus a polymerizable liquid crystal compound having two or more polymerizable functional groups in its molecule has been preferably used as a polymerizable liquid crystal compound used for a polymerizable liquid crystal composition. However, since the polymerizable liquid crystal compound having two or more polymerizable functional groups in its molecule is used, the resultant film has a higher crosslink density, thereby causing the problem of decreasing adhesion to a substrate (Patent Literatures 1 and 2). While when using a polymerizable liquid crystal composition which contains both a polymerizable liquid crystal compound having two or more polymerizable functional groups in its molecule and a polymerizable liquid crystal compound having one polymerizable functional group in its molecule, adhesion to a substrate is improved, but the problem of degrading durability occurs due to decreased heat resistance.

### Citation List

### Patent Literature

PTL 1: Japanese Unexamined Patent Application Publication No. 11-349947
PTL 2: Japanese Unexamined Patent Application Publication (Translation of PCT Application) No. 2007-506813

### Summary of Invention

### Technical Problem

A problem to be solved by the present invention is to provide a polymerizable liquid crystal composition which produces a coating film having excellent adhesion to a substrate and durability by applying on the substrate and then heating or active energy ray irradiation, and also provide an optically anisotropic body using the polymerizable composition and having good alignment. Solution to Problem

As a result of earnest repeated investigations for solving the problem in the present invention, the present invention has been achieved.

That is, the present invention provides a polymerizable liquid crystal composition containing at least one polymerizable liquid crystal compound (I) having one polymerizable functional group in its molecule, at least one polymerizable liquid crystal compound (II) having two polymerizable functional groups in its molecule, and at least one compound (III) having tree or more aromatic rings at least one of which is substituted by an alkyl group having 1 to 5 carbon atoms or an alkoxy group having 1 to 5 carbon atoms. Also, the present invention provides an optically anisotropic body using the polymerizable liquid crystal composition of the present invention. Advantageous Effects of Invention

An optically anisotropic body having excellent adhesion to a substrate and excellent durability can be produced by using a polymerizable liquid crystal composition of the present invention, and thus the polymerizable liquid crystal composition is useful for application to optical materials such as a retardation film and the like.

### Description of Embodiments

The best mode of a polymerizable liquid crystal composition according to the present invention is described below, and in the present invention, the term "liquid crystal" of the polymerizable liquid crystal composition is aimed at representing liquid crystallinity in a state in which the polymerizable liquid crystal composition is applied on a substrate, and then an organic solvent is removed. Also, in the present invention, the term "liquid crystal" of the polymerizable liquid crystal compound is aimed at representing liquid crystallinity when only one polymerizable liquid crystal compound is used and representing liquid crystallinity when a mixture with another liquid crystal compound is used. The polymerizable liquid crystal composition can be formed into a polymer (film) by polymerization by irradiation with light such as ultraviolet light or the like, heating, or combination of both.

### (Polymerizable liquid crystal compound)

The polymerizable liquid crystal compound used in the present invention is not particularly limited, and any known common compound can be used as long as the compound shows liquid crystallinity singly or in a composition with another compound and has at least one polymerizable functional group.

Examples thereof include rod-like polymerizable liquid crystal compounds each having a rigid part called "mesogen" in which a plurality of structures, such as a 1,4-phenylene group, a 1,4-cyclohexylene group, or the like, are connected, and a polymerizable functional group such as a vinyl group, an acryl group, or a (meth)acryl group, as described in Handbook of Liquid Crystals (D. Demus, J.W. Goodby, G.W. Gray, H.W. Spiess, edited by V. Vill, issued by Wiley-VCH, 1998), "Kikan Kagaku Sosetsu" No. 22, Liquid Crystal Chemistry (edited by Chemical Society of Japan, 1994), or Japanese Unexamined Patent Application Publication No. 7-294735, Japanese Unexamined Patent Application Publication No. 8-3111, Japanese Unexamined Patent Application Publication No. 8-29618, Japanese Unexamined Patent Application Publication No. 11-80090, Japanese Unexamined Patent Application Publication No. 11-116538, Japanese Unexamined Patent Application Publication No. 11-148079, etc.; and rod-like polymerizable liquid crystal compounds each having a maleimide group as described in Japanese Unexamined Patent Application Publication No. 2004-2373 and Japanese Unexamined Patent Application Publication No. 2004-99446. In particular, rod-like liquid crystal compounds having a polymerizable group are preferred because the compounds having a liquid crystal temperature range including a low temperature near room temperature can be easily formed.

### (Monofunctional polymerizable liquid crystal compound)

Preferred compounds as a polymerizable liquid crystal compound (I) having one polymerizable functional group in its molecule include compounds represented by general formula (I-1) below.
[Chem. 1]

P²-(S¹-X¹)_{q1}-MG-R²¹ (I-1)

(In the formula, P² represents a polymerizable functional group; S¹ represents an alkylene group having 1 to 18 carbon atoms in which one -CH₂- or two or more unadjacent -CH₂- in the alkylene group may be each independently substituted by -O-, -COO-, -OCO-, or -OCO-O-, and one or two or more hydrogen atoms possessed by the alkylene group may be each substituted by a halogen atom or a CN group; X¹ represents -O-, -S-, -OCH₂-, -CH₂O-, -CO-,-COO-, -OCO-, -CO-S-, -S-CO-, -O-CO-O-, -CO-NH-, -NH-CO-,-SCH₂-, -CH₂S-, -CF₂O-, -OCF₂-, -CF₂S-, -SCF₂-, -CH=CH-COO-,-CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-,-CH₂-COO-, -CH₂-OCO-, -CH=CH-, -N=N-, -CH=N-N=CH-, -CF=CF-,-C≡C-, or a single bond (wherein P²-S¹ and S¹-X¹ do not contain -O-O-, -O-NH-, -S-S-, and -O-S- groups); q1 represents 0 or 1; MG represents a mesogenic group; R²¹ represents a hydrogen atom, a halogen atom, a cyano group, a linear or branched alkyl group having 1 to 12 carbon atoms, or a linear or branched alkenyl group having 1 to 12 carbon atoms, in which one -CH₂- or two or more unadjacent -CH₂- in the alkyl group and alkenyl group may be each independently substituted by-O-, -S-, -CO-, -COO-, -OCO-, -CO-S-, -S-CO-, -O-CO-O-, -CO-NH-, -NH-CO-, -NH-, -N(CH₃)-, -CH=CH-COO-, -CH=CH-OCO-,-COO-CH=CH-, -OCO-CH=CH-, -CH=CH-, -CF=CF-, or -C≡C-, and one or two or more hydrogen atoms possessed by the alkyl group and alkenyl group may be each independently substituted by a halogen atom or a cyano group, and when a plurality of hydrogen atoms are substituted, the substituents may be the same or different.)

Here, P² preferably represents a substituent selected from polymerizable groups represented by formulae (P-2-1) to (P-2-20) below.

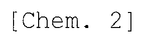

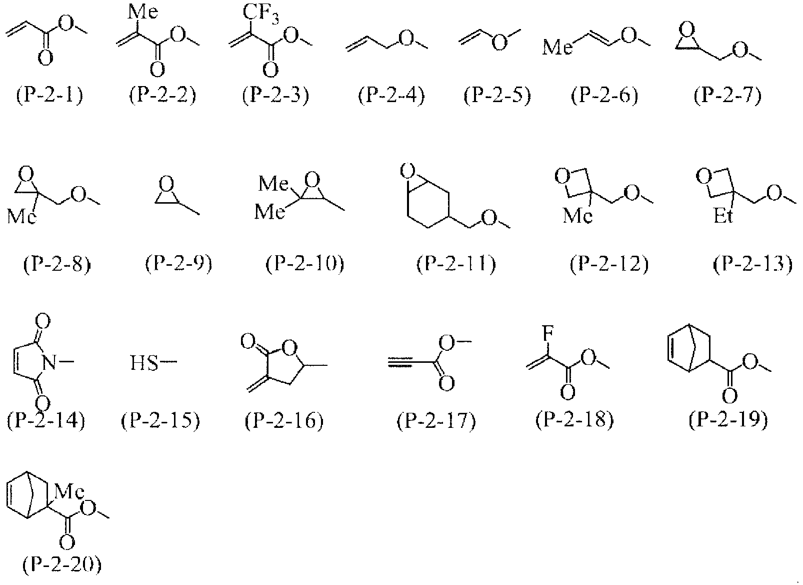

Among the polymerizable functional groups, the formulae (P-2-1), (P-2-2), (P-2-7), (P-2-12), and (P-2-13) are preferred, and the formulae (P-2-1) and (P-2-2) are more preferred from the viewpoint of enhancing polymerizability.

Also, S¹ preferably represents an alkylene group having 1 to 15 carbon atoms in which one -CH₂- or two or more unadjacent -CH₂- in the alkylene group may be each independently substituted by -O-, -COO-, -OCO-, or -OCO-O-, and one or two or more hydrogen atoms possessed by the alkylene group may be each substituted by a halogen atom or a CN group, and S¹ more preferably represents an alkylene group having 1 to 12 carbon atoms in which one -CH₂- or two or more unadjacent -CH₂- in the alkylene group may be each independently substituted by -O-, -COO-, -OCO-, or -OCO-O-.
X¹ preferably represents -O-, -OCH₂-, -CH₂O-, -CO-,-COO-, -OCO-, -O-CO-O-, -CO-NH-, -NH-CO-, -CF₂O-, -OCF₂-,-CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C=C-, or a single bond, and X¹ more preferably represents -O-, -OCH₂-, -CH₂O-, -CO-, -COO-, -OCO-, -O-CO-O-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-,-CF=CF-, -C≡C-, or a single bond.

MG represents a mesogenic group and is represented by general formula (I-b),
[Chem. 3]

-(B1-Z1)ᵣ₁-B2-Z2-B3- (I-b)

(in the formula, B1, B2, and B3 each independently represent a 1,4-phenylene group, a 1,4-cyclohexylene group, 1,4-cyclohexenyl group, a tetrahydropyran-2,5-diyl group, a 1,3-dioxane-2,5-diyl group, a tatrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have as a substituent one or more F, Cl, CF₃, OCF₃, CN groups, alkyl groups having 1 to 8 carbon atoms, alkoxy groups having 1 to 8 carbon atoms, alkanoyl groups having 1 to 8 carbon atoms, alkanoyloxy groups having 1 to 8 carbon atoms, alkoxycarbonyl groups having 1 to 8 carbon atoms, alkenyl groups having 2 to 8 carbon atoms, alkenyloxy groups having 2 to 8 carbon atoms, alkenoyl groups having 2 to 8 carbon atoms, and/or alkenoyloxy groups having 2 to 8 carbon atoms; and Z1 and Z2 each independently represent -COO-, -OCO-, -CH₂CH₂-, -OCH₂-, -CH₂O-, -CH=CH-, -C≡C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms, which may have a halogen atom, or a single bond; r1 represents 0, 1, 2, or 3; and when a plurality of each of B1 and Z1 are present, they may be the same or different). Among these, B1, B2, and B3 preferably each independently represent a 1,4-phenylene group, a 1,4-cyclohexylene group, or a 2,6-naphthylene group.

R²¹ more preferably represents a hydrogen atom, a halogen atom, a cyano group, a linear or branched alkyl group having 1 to 8 carbon atoms, or a linear or branched alkenyl group having 1 to 8 carbon atoms, in which one -CH₂- or two or more unadjacent -CH₂- in the alkyl group and alkenyl group may be each independently substituted by -O-, -CO-, -COO-, -OCO-, -O-CO-O-, -CH=CH-COO-, -CH=CH-OCO-,-COO-CH=CH-, -OCO-CH=CH-, -CH=CH-, or -C=C-, and one or two or more hydrogen atoms possessed by the alkyl group and alkenyl group may be each independently substituted by a halogen atom or a CN group, and when a plurality of hydrogen atoms are substituted, the substituents may be the same or different.

Examples of the general formula (I-1) include compounds represented by general formulae (I-1-1) to (I-1-4) below, but are not limited to these general formulae.
[Chem. 4]

P²-(S¹-X)_{q1}-B2-Z2-B3-R²¹ (I-1-1)

P²-(S¹-X¹)_{q1}-B11-Z11-B2-Z2-B3-R²¹ (I-1-2)

P²-(S¹-X)_{q1}-B11-Z11-B12-Z12-B2-Z2-B3-R²¹ (I-1-3)

P²-(S¹-X¹)_{q1}-B11-Z11-B12-Z12-B13-Z13-B2-Z2-B3-R²¹ (I-1-4)

In the formulae, P², S¹, X¹, q1, and R²¹ each independently represent the same definition as in the general formula (I-1),

B11, B12, B13, B2, and B3 represent the same definition as B1 to B3 in the general formula (I-b) and may be the same or different from each other, and

Z11, Z12, Z13, and Z2 represent the same definition as Z1 to Z3 in the general formula (I-b) and may be the same or different from each other.

Examples of compounds represented by the general formulae (I-1-1) to (I-1-4) include, but are not limited to, compounds represented by formula (I-1-1-1) to formula (I-1-1-26) below.

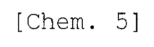

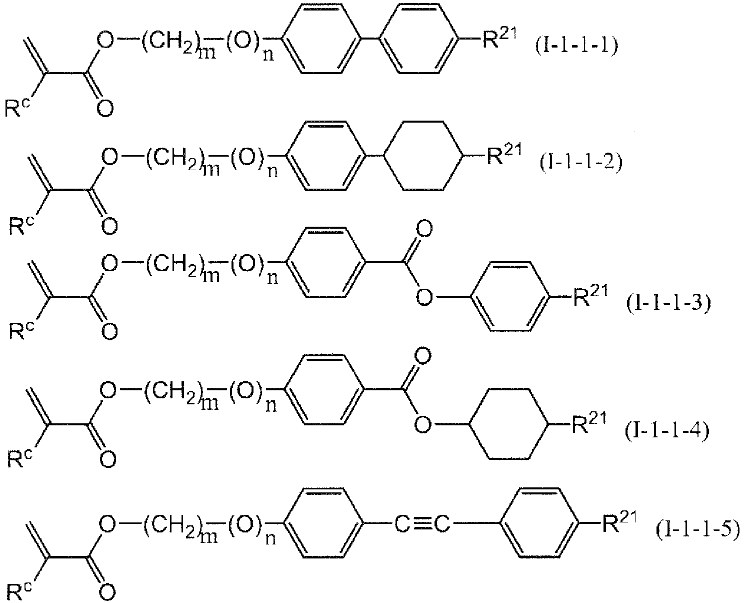

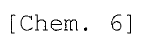

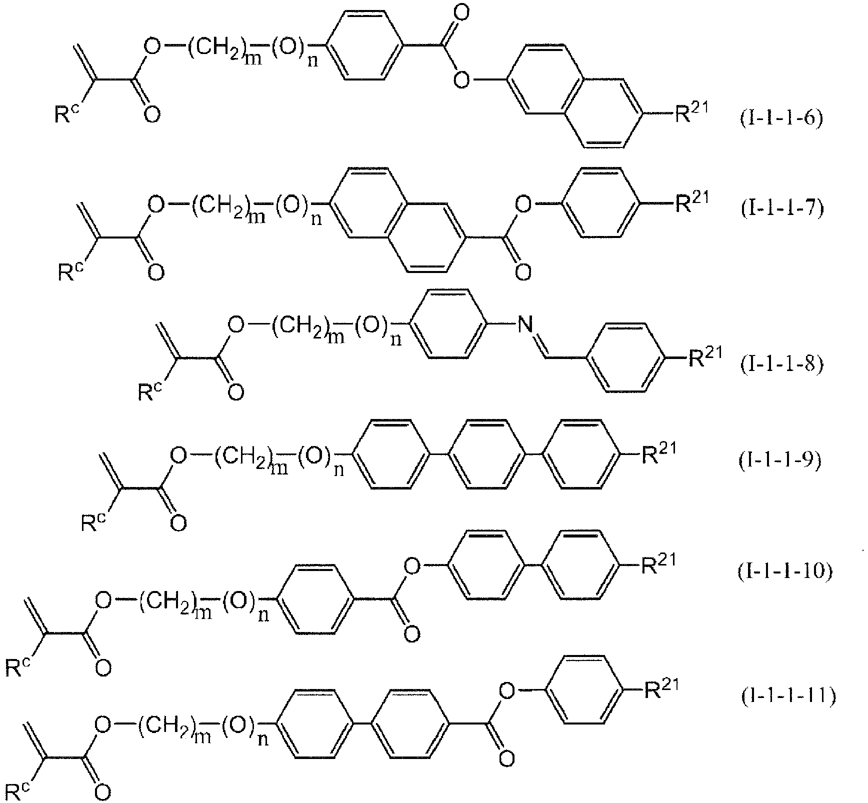

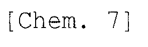

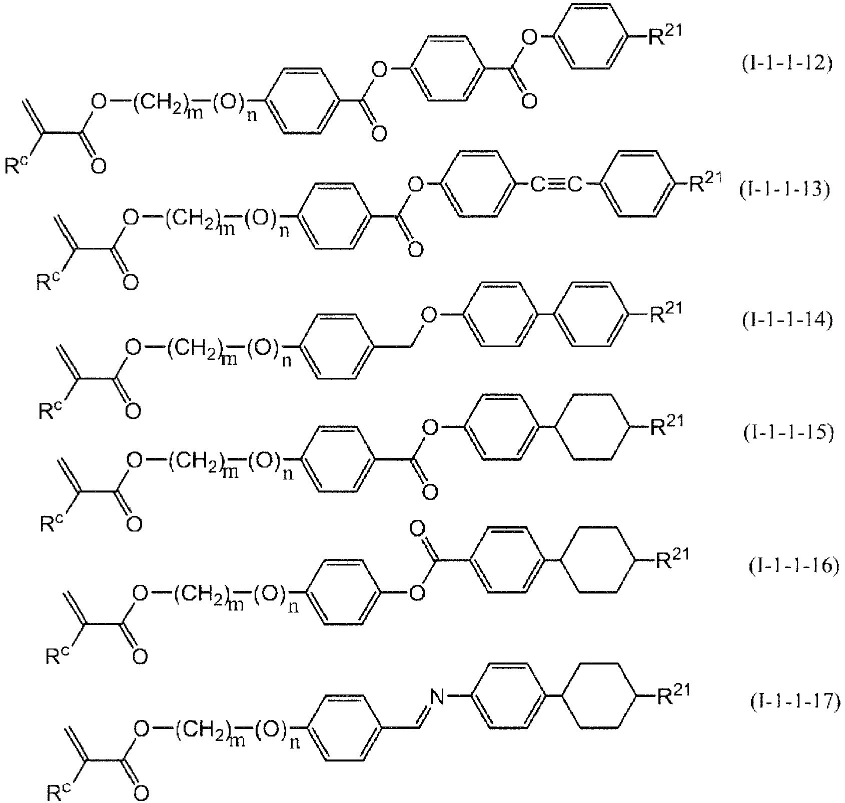

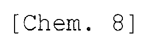

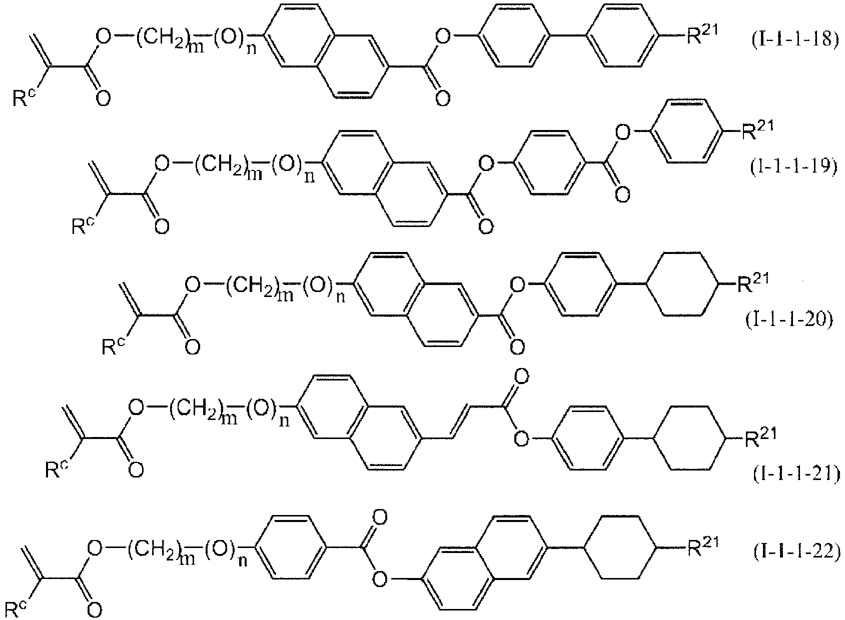

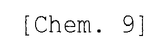

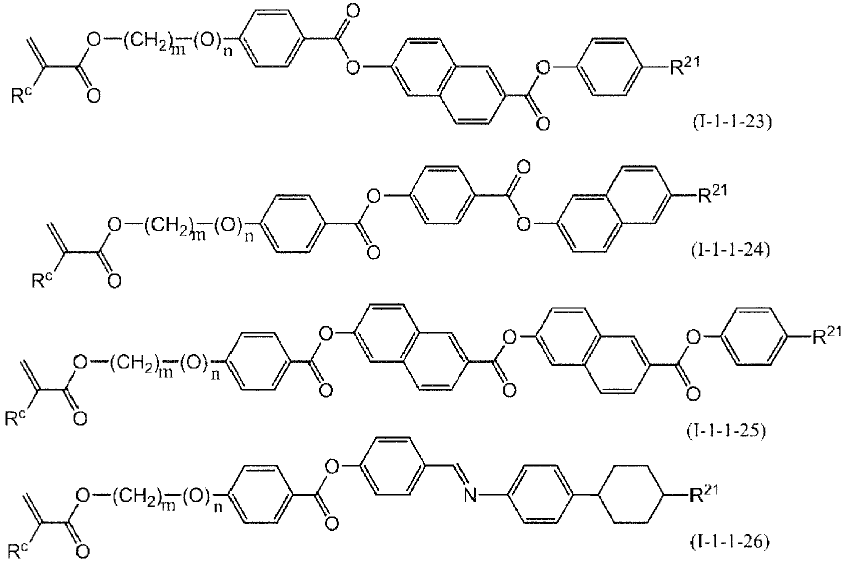

In the formulae, R^{c} represents a hydrogen atom or a methyl group, m represents an integer of 0 to 18, n represents 0 or 1, R²¹ represents the same definition as in the general formulae (I-1-1) to (I-1-4), and preferably represents a hydrogen atom, a halogen atom, a cyano group, or a linear alkyl group having 1 to 6 carbon atoms or linear alkenyl group having 1 to 6 carbon atoms, in which one -CH₂- may be substituted by -O-, -CO-, -COO-, or -OCO-.

The cyclic group may have, as a substituent, one or more F, Cl, CF₃, OCF₃, CN groups, alkyl groups having 1 to 8 carbon atoms, alkoxy groups having 1 to 8 carbon atoms, alkanoyl groups having 1 to 8 carbon atoms, alkanoyloxy groups having 1 to 8 carbon atoms, alkoxycarbonyl groups having 1 to 8 carbon atoms, alkenyl groups having 2 to 8 carbon atoms, alkenyloxy groups having 2 to 8 carbon atoms, alkenoyl groups having 2 to 8 carbon atoms, or alkenoyloxy groups having 2 to 8 carbon atoms.

The total content of the polymerizable liquid crystal compound having one polymerizable functional group in its molecule is preferably 0 to 90% by mass, more preferably 0 to 85% by mass, and particularly preferably 0 to 80% by mass of the total amount of the polymerizable liquid crystal compounds used. When adhesion of the resultant coating film to a substrate is regarded as important, the lower limit value is preferably 5% by mass or more and more preferably 10% by mass or more, while when curability of the resultant coating film is regarded as important, the upper limit value is preferably 80% by mass or less and more preferably 70% by mass or less.

### (Difunctional polymerizable liquid crystal compound)

Preferred compounds as a polymerizable liquid crystal compound (II) having two polymerizable functional groups in its molecule include compounds represented by general formula (II-1) below.
[Chem. 10]

P²-(S¹-X¹)_{q1}-MG-(X²-S²)_{q2}-P³ (II-1)

(In the formula, P² and P³ each independently represent a polymerizable functional group; S¹ and S² each independently represent an alkylene group having 1 to 18 carbon atoms in which one -CH₂- or two or more unadjacent - CH₂- in the alkylene group may be each independently substituted by -O-, -COO-, -OCO-, or -OCO-O-, and one or two or more hydrogen atoms possessed by the alkylene group may be each substituted by a halogen atom or a CN group; X¹ and X² each independently represent -O-, -S-, -OCH₂-, -CH₂O-,-CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-, - OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C-, or a single bond (wherein P²-S¹, P³-S², S¹-X¹, and S²-X² do not contain -O-O-, -O-NH-, -S-S-, and -O-S- groups); q1 and q2 each independently represent 0 or 1; and MG represents a mesogenic group.)

Here, P² and P3 preferably each independently represent a substituent selected from polymerizable groups represented by formulae (P-2-1) to (P-2-20) below.

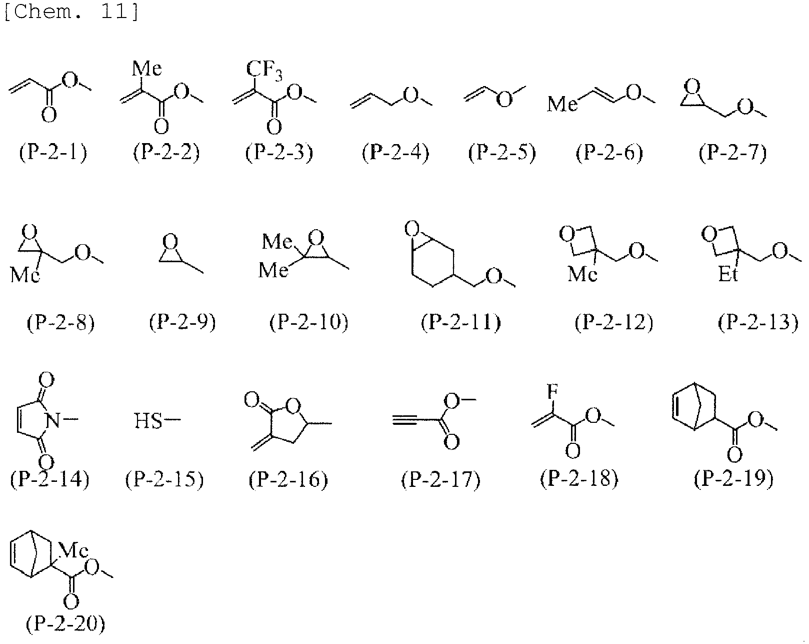

Among these polymerizable functional groups, the formulae (P-2-1), (P-2-2), (P-2-7), (P-2-12), and (P-2-13) are preferred, and the formulae (P-2-1) and (P-2-2) are more preferred from the viewpoint of enhancing polymerizability.

Also, S¹ and S² preferably each independently represent an alkylene group having 1 to 15 carbon atoms in which one - CH₂- or two or more unadjacent -CH₂- in the alkylene group may be each independently substituted by -O-, -COO-, -OCO-, or -OCO-O-, and one or two or more hydrogen atoms possessed by the alkylene group may be each substituted by a halogen atom or a CN group, and S¹ and S² more preferably each independently represent an alkylene group having 1 to 12 carbon atoms in which one -CH₂- or two or more unadjacent - CH₂- in the alkylene group may be each independently substituted by -O-, -COO-, -OCO-, or -OCO-O-.

X¹ and X² preferably each independently represent -O-,-OCH₂-, -CH₂O-, -CO-, -COO-, -OCO-, -O-CO-O-, -CO-NH-, -NH-CO-, -CF₂O-, -OCF₂-, -CH=CH-COO-, -CH=CH-OCO-, -COO-CH=CH-, -OCO-CH=CH-, -COO-CH₂CH₂-, -OCO-CH₂CH₂-, CH₂CH₂-COO-, - CH₂CH₂-OCO-, -COO-CH₂-, -OCO-CH₂-, -CH₂-COO-, -CH₂-OCO-, - CH=CH-, -N=N-, -CH=N-N=CH-, -CF=CF-, -C≡C-, or a single bond, and X¹ and X² each independently more preferably represent-O-, -OCH₂-, -CH₂O-, -CO-, -COO-, -OCO-, -O-CO-O-, -CF₂O-,-OCF₂-, -CH=CH-COO-, -CH=CH-OCO-, -COO-CH=CH-, -OCO-CH=CH-,-COO-CH₂CH₂-, -OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -CF=CF-,-C≡C-, or a single bond.

MG represents a mesogenic group and is represented by general formula (II-b)
[Chem. 12]

-(B1-Z1)ᵣ₁-B2-Z2-B3- (II-b)

(in the formula, B1, B2, and B3 each independently represent a 1,4-phenylene group, a 1,4-cyclohexylene group, 1,4-cyclohexenyl group, a tetrahydropyran-2,5-diyl group, a 1,3-dioxane-2,5-diyl group, a tatrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have as a substituent one or more F, Cl, CF₃, OCF₃, CN groups, alkyl groups having 1 to 8 carbon atoms, alkoxy groups having 1 to 8 carbon atoms, alkanoyl groups having 1 to 8 carbon atoms, alkanoyloxy groups having 1 to 8 carbon atoms, alkoxycarbonyl groups having 1 to 8 carbon atoms, alkenyl groups having 2 to 8 carbon atoms, alkenyloxy groups having 2 to 8 carbon atoms, alkenoyl groups having 2 to 8 carbon atoms, and/or alkenoyloxy groups having 2 to 8 carbon atoms; and Z1 and Z2 each independently represent -COO-, -OCO-, -CH₂CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms, which may have a halogen atom, or a single bond; r1 represents 0, 1, 2, or 3; and when a plurality of each of B1 and Z1 are present, they may be the same or different). Among these, B1, B2, and B3 preferably each independently represent a 1,4-phenylene group, a 1,4-cyclohexylene group, or a 2,6-naphthylene group.

Examples of the general formula (II-1) include compounds represented by general formulae (II-1-1) to (II-1-4) below, but are not limited to these general formulae.
[Chem. 13]

P²-(S¹-X¹)_{q1}-B2-Z2-B3-(X²-S²)_{q2}-P³ (II-1-1)

P²-(S¹-X)_{q1}-B11-Z11-B2-Z2-B3-(X²-S²)_{q2}-P³ (II-1-2)

P²-(S¹-X¹)_{q1}-B11-Z11-B12-Z12-B2-Z2-B3-(X²-S²)_{q2}-P³ (II-1-3)

P²-(S¹-X¹)_{q1}-B11-Z11-B 12-Z12-B 13-Z13-B2-Z2-B3-(X²-S²)_{q2}-P³ (II-1-4)

In the formulae, P², S¹, X¹, q1, MG, X², S², q2, and P³ each independently represent the same definition as in the general formula (II-1),
B11, B12, B13, B2, and B3 represent the same definition as B1 to B3 in the general formula (II-b) and may be the same or different from each other, and
Z11, Z12, Z13, and Z2 represent the same definition as Z1 and Z2 in the general formula (II-b) and may be the same or different from each other.

Among the compounds represented by the general formulae (II-1-1) to (II-1-4), a compound having tree or more cyclic structures among the compounds represented by the general formulae (II-1-2) to (II-1-4) is preferably used because of the good alinement of the resultant optically anisotropic body and good curability, and a compound represented by the general formula (II-1-2) is particularly preferably used.

Examples of compounds represented by the general formulae (II-1-1) to (II-1-4) include, but are not limited to, compounds represented by formula (II-1-1-1) to formula (II-1-1-21) below.

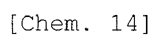

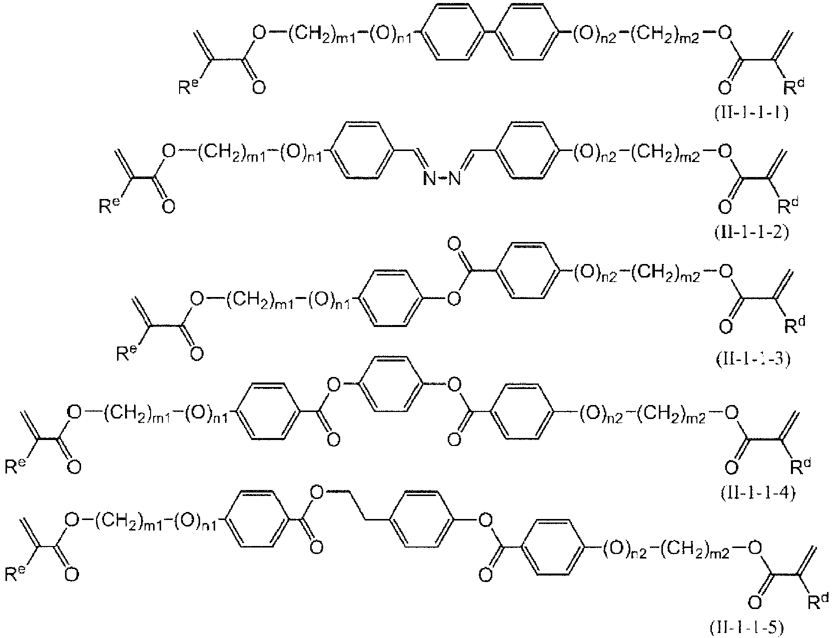

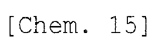

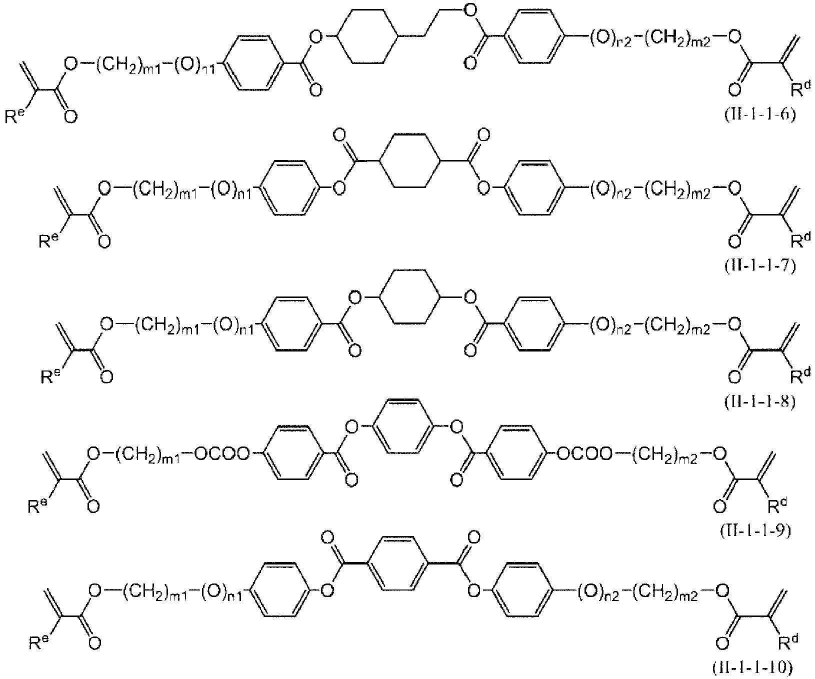

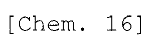

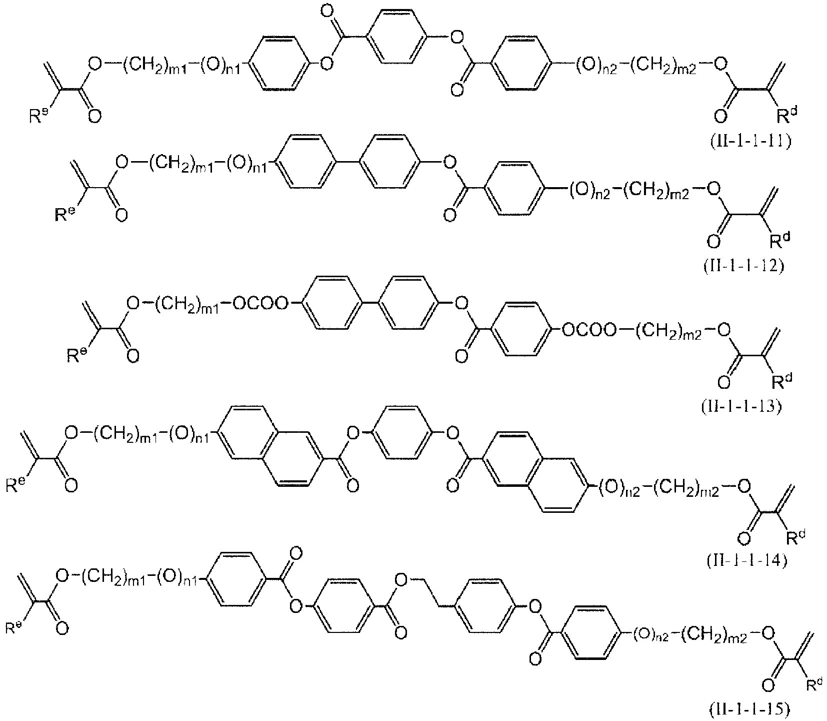

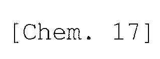

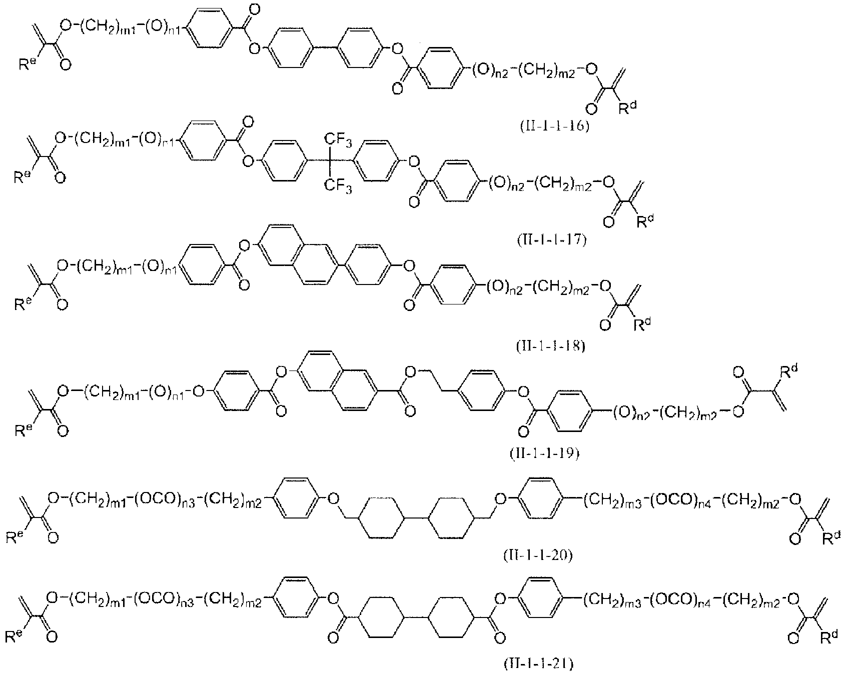

In the formulae, R^{d} and R^{e} each independently represent a hydrogen atom or a methyl group, the cyclic group may have, as a substituent, one or more F, Cl, CF₃, OCF₃, CN groups, alkyl groups having 1 to 8 carbon atoms, alkoxy groups having 1 to 8 carbon atoms, alkanoyl groups having 1 to 8 carbon atoms, alkanoyloxy groups having 1 to 8 carbon atoms, alkoxycarbonyl groups having 1 to 8 carbon atoms, alkenyl groups having 2 to 8 carbon atoms, alkenyloxy groups having 2 to 8 carbon atoms, alkenoyl groups having 2 to 8 carbon atoms, or alkenoyloxy groups having 2 to 8 carbon atoms, m1 and m2 each independently represent an integer o 0 to 18, and n1, n2, n3, and n4 each independently represent 0 or 1.

One or two or more liquid crystal compounds each having two polymerizable functional groups can be used, one to five liquid crystal compounds are preferred, and two to five liquid crystal compounds are more preferred.

The total content of the polymerizable liquid crystal compound having two polymerizable functional groups in its molecule is preferably 10 to 90% by mass, more preferably 15 to 85% by mass, and particularly preferably 20 to 80% by mass of the total amount of the polymerizable liquid crystal compounds used. When curability of the resultant coating film is regarded as important, the lower limit value is preferably 30% by mass or more and more preferably 50% by mass or more, while adhesion of the resultant coating film to a substrate is regarded as important, the upper limit value is preferably 85% by mass or less and more preferably 80% by mass or less.

### (Polyfunctional polymerizable liquid crystal compound)

A compound having three polymerizable functional groups is preferably used as a polyfunctional polymerizable liquid crystal compound having three or more polymerizable functional groups in its molecule. Preferred compounds of the polyfunctional polymerizable liquid crystal compound having three polymerizable functional groups in its molecule include compounds represented by general formula (IV-1) below.

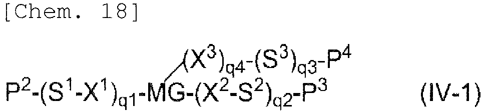

(In the formula, P² to P⁴ each independently represent a polymerizable functional group; S¹ to S³ each independently represent an alkylene group having 1 to 18 carbon atoms in which one -CH₂- or two or more unadjacent -CH₂- in the alkylene group may be each independently substituted by -O-, -COO-, -OCO-, or -OCO-O-, and one or two or more hydrogen atoms possessed by the alkylene group may be each substituted by a halogen atom or a CN group; X¹ to X³ each independently represent -O-, -S-, -OCH₂-, -CH₂O-, -CO-,-COO-, -OCO-, -CO-S-, -S-CO-, -O-CO-O-, -CO-NH-, -NH-CO-,-SCH₂-, -CH₂S-, -CF₂O-, -OCF₂-, -CF₂S-, -SCF₂-, -CH=CH-COO-,-CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-,-CH₂-COO-, -CH₂-OCO-, -CH=CH-, -N=N-, -CH=N-N=CH-, -CF=CF-,-C≡C-, or a single bond (wherein P²-S¹, P³-S², P⁴-S³, S¹-X¹, S²-X², and S³-X³ do not contain -O-O-, -O-NH-, -S-S-, and -O-S-groups); q1 and q4 each independently represent 0 or 1; and MG represents a mesogenic group.)

Here, P² to P⁴ preferably each independently represent a substituent selected from polymerizable groups represented by formulae (P-2-1) to (P-2-20) below.

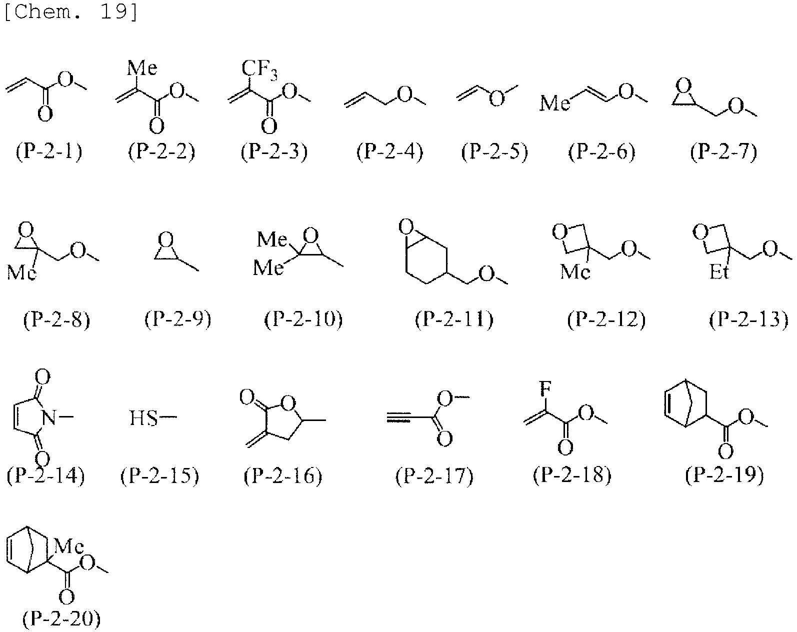

Among these polymerizable functional groups, the formulae (P-2-1), (P-2-2), (P-2-7), (P-2-12), and (P-2-13) are preferred, and the formulae (P-2-1) and (P-2-2) are more preferred from the viewpoint of enhancing polymerizability.

Also, S¹ to S³ preferably each independently represent an alkylene group having 1 to 15 carbon atoms in which one - CH₂- or two or more unadjacent -CH₂- in the alkylene group may be each independently substituted by -0-, -COO-, -OCO-, or -OCO-O-, and one or two or more hydrogen atoms possessed by the alkylene group may be each substituted by a halogen atom or a CN group, and S¹ to S³ more preferably each independently represent an alkylene group having 1 to 12 carbon atoms in which one -CH₂- or two or more unadjacent-CH₂- in the alkylene group may be each independently substituted by -O-, -COO-, -OCO-, or -OCO-O-. X¹ to X³ preferably each independently represent -O-, -OCH₂-, -CH₂O-, -CO-, -COO-, -OCO-, -O-CO-O-, -CO-NH-, -NH-CO-, -CF₂O-,-OCF₂-, -CH=CH-COO-, -CH=CH-OCO-, -COO-CH=CH-, -OCO-CH=CH-,-COO-CH₂CH₂-, -OCO-CH₂CH₂-, CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C-, or a single bond, and X¹ to X³ each independently more preferably represent -O-, -OCH₂-, -CH₂O-, -CO-, -COO-, -OCO-, -O-CO-O-, -CF₂O-, -OCF₂-, -CH=CH-COO-, - CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-,-CH₂-COO-, -CH₂-OCO-, -CH=CH-, -CF=CF-, -C≡C-, or a single bond.

MG represents a mesogenic group and is represented by general formula (IV-b)
[Chem. 20]

-(B1-Z1)ᵣ₁-B2-Z2-B3- (IV-b)

(in the formula, B1, B2, and B3 each independently represent a 1,4-phenylene group, a 1,4-cyclohexylene group, 1,4-cyclohexenyl group, a tetrahydropyran-2,5-diyl group, a 1,3-dioxane-2,5-diyl group, a tatrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have as a substituent one or more F, Cl, CF₃, OCF₃, CN groups, alkyl groups having 1 to 8 carbon atoms, alkoxy groups having 1 to 8 carbon atoms, alkanoyl groups having 1 to 8 carbon atoms, alkanoyloxy groups having 1 to 8 carbon atoms, alkoxycarbonyl groups having 1 to 8 carbon atoms, alkenyl groups having 2 to 8 carbon atoms, alkenyloxy groups having 2 to 8 carbon atoms, alkenoyl groups having 2 to 8 carbon atoms, and/or alkenoyloxy groups having 2 to 8 carbon atoms; and Z1 and Z2 each independently represent -COO-, -OCO-, -CH₂CH₂-, -OCH₂-, -CH₂O-, -CH=CH-, -C=C-, -CH=CHCOO-, -OCOCH=CH-, -CH₂CH₂COO-, -CH₂CH₂OCO-, -COOCH₂CH₂-, -OCOCH₂CH₂-, -C=N-, -N=C-, -CONH-, -NHCO-, -C(CF₃)₂-, an alkyl group having 2 to 10 carbon atoms, which may have a halogen atom, or a single bond; r1 represents 0, 1, 2, or 3; and when a plurality of each of B1 and Z1 are present, they may be the same or different). Among these, B1, B2, and B3 preferably each independently represent a 1,4-phenylene group, a 1,4-cyclohexylene group, or a 2,6-naphthylene group.

Examples of the general formula (IV-1) include compounds represented by general formulae (IV-1-1) to (IV-1-8) below, but are not limited to these general formulae.

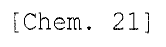

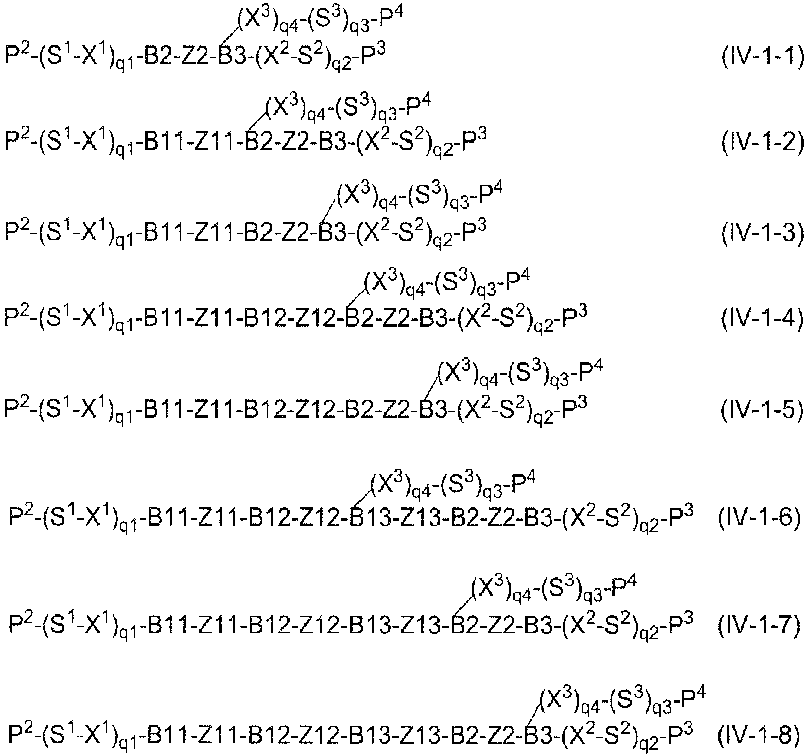

In the formulae, P², S¹, X¹, q1, MG, X², S², q2, P³, X³, q4, S³, q3, and P⁴ each independently represent the same definition as in the general formula (IV-1),
B11, B12, B13, B2, and B3 represent the same definition as B1 to B3 in the general formula (IV-b) and may be the same or different from each other, and
Z11, Z12, Z13, and Z2 represent the same definition as Z1 and Z2 in the general formula (IV-b) and may be the same or different from each other.

Examples of compounds represented by the general formulae (IV-1-1) to (IV-1-8) includes, but are not limited to, compounds represented by formula (IV-1-1-1) to formula (IV-1-1-6) below.

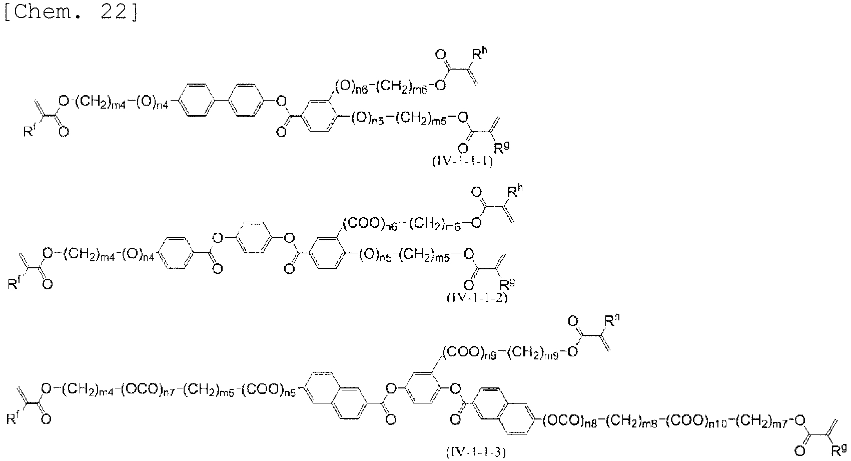

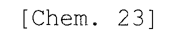

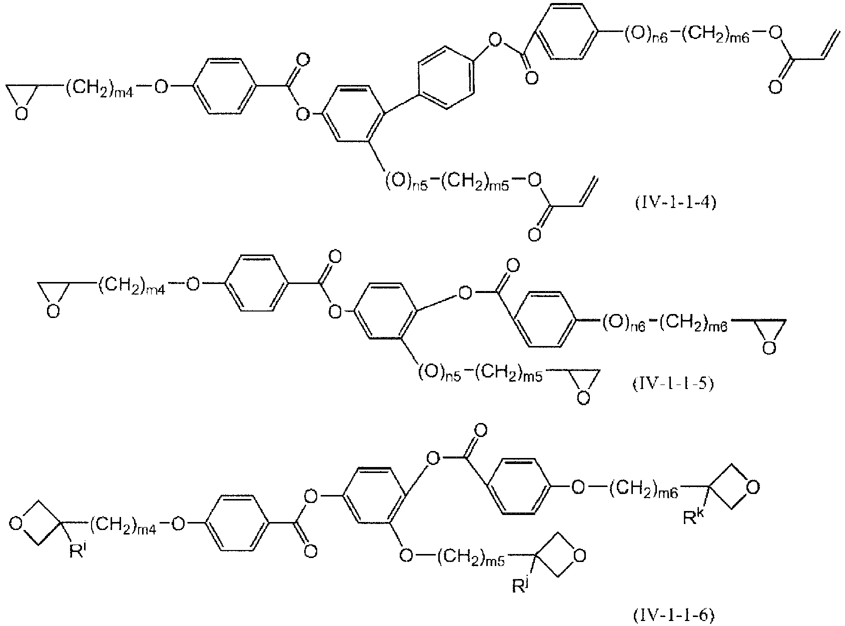

In the formulae, R^{f}, R^{g}, and R^{h} each independently represent a hydrogen atom or a methyl group; Rⁱ, R^{j}, and R^{k} each independently represent a hydrogen atom, a halogen atom, an alkyl group having 1 to 6 carbon atoms, an alkoxy group having 1 to 6 carbon atoms, or a cyano group, and when these groups are each independently an alkyl group having 1 to 6 carbon atoms or an alkoxy group having 1 to 6 carbon atoms, it may be completely unsubstituted or substituted by one or two or more halogen atoms; and the cyclic group may have, as a substituent, one or more F, Cl, CF₃, OCF₃, CN groups, alkyl groups having 1 to 8 carbon atoms, alkoxy groups having 1 to 8 carbon atoms, alkanoyl groups having 1 to 8 carbon atoms, alkanoyloxy groups having 1 to 8 carbon atoms, alkoxycarbonyl groups having 1 to 8 carbon atoms, alkenyl groups having 2 to 8 carbon atoms, alkenyloxy groups having 2 to 8 carbon atoms, alkenoyl groups having 2 to 8 carbon atoms, or alkenoyloxy groups having 2 to 8 carbon atoms.

m4 to m9 each independently represent an integer of 0 to 18, and n1 to n10 each independently represent 0 or 1,

One or two or more polyfunctional polymerizable liquid crystal compounds each having three or more polymerizable functional groups can be used.

The total content of the polyfunctional polymerizable liquid crystal compound having three or more polymerizable functional groups in its molecule is preferably 0 to 40% by mass, more preferably 0 to 30% by mass, and particularly preferably 0 to 20% by mass of the total amount of the polymerizable liquid crystal compounds used.

### (Combination of a plurality of polymerizable liquid crystal compounds)

A mixture of a plurality of the polymerizable liquid crystal compounds is preferably used for the polymerizable liquid crystal composition of the present invention, and at least one the polymerizable liquid crystal compound having one polymerizable functional group in its molecule and at least one polymerizable liquid crystal compound having two polymerizable functional groups in its molecule are used as essential components. Particularly preferred is a mixture of at least one polymerizable liquid crystal compound having one polymerizable functional group in its molecule and selected from the (I-1-2) to (I-1-4) and at least one polymerizable liquid crystal compound having two polymerizable functional groups in its molecule and selected from the (II-1-2) to (II-1-4).

The total amount of the polyfunctional polymerizable liquid crystal compound having one polymerizable functional group in its molecule and the polymerizable liquid crystal compound having two polymerizable functional groups in its molecule is preferably 60% to 100% by mass and particularly preferably 70% to 100% by mass of the total amount of the polymerizable liquid crystal compounds used.

### (Other polymerizable liquid crystal compound)

Also, a compound having a mesogenic group without a polymerizable group may be added to the polymerizable liquid crystal composition of the present invention, and examples of the compound include those used for usual liquid crystal devices, for example, a STN (super twisted nematic) liquid crystal, TN (twisted nematic) liquid crystal, TFT (thin-film transistor) liquid crystal, and the like.

A preferred compound of the compound having a mesogenic group without a polymerizable functional group is one represented by general formula (5) below.
[Chem. 24]

R⁵¹-MG3-R⁵² (5)

Example the mesogenic group or mesogenity supporting group represented by MG3 include groups represented by general formula (5-b) below
[Chem. 25]

-Z0^{d}-(A1^{d}-Z1^{d})ₙₑ-A2^{d}-Z2^{d}-A3^{d}-Z3^{d}- (5-b)

(in the formula, A1^{d}, A2^{d}, and A3^{d} each independently represent a 1,4-phenylene group, a 1,4-cyclohexylene group, 1,4-cyclohexenyl group, a tetrahydropyran-2,5-diyl group, a 1,3-dioxane-2,5-diyl group, a tatrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group, which may have as a substituent one or more F, Cl, CF₃, OCF₃, CN groups, alkyl groups, alkoxy groups, alkanoyl groups, or alkanoyloxy groups having 1 to 8 carbon atoms, or alkenyl groups, alkenyloxy groups, alkenoyl groups, or alkenoyloxy groups having 2 to 8 carbon atoms; and
Z0^{d}, Z1^{d}, Z2^{d}, and Z3^{d} each independently represent -COO-, -OCO-, -CH₂CH₂-, -OCH₂-, -CH₂O-, -CH=CH-, -C≡C-, -CH=CHCOO-, -OCOCH=CH-, -CH₂CH₂COO-, -CH₂CH₂OCO-, -COOCH₂CH₂-,-OCOCH₂CH₂-, -CONH-, -NHCO-, an alkylene group having 2 to 10 carbon atoms, which may have a halogen atom, or a single bond;
n^{e} represents 0, 1, or 2; and
R⁵¹ and R⁵² each independently represent a hydrogen atom, a halogen atom, a cyano group, or an alkyl group having 1 to 18 carbon atoms, which may be substituted by one or more halogen atoms or CN and in which one -CH₂- or two or more unadjacent -CH₂- in the alkyl group may be each independently substituted by -O-, -S-, -NH-, -N(CH₃)-, -CO-, -COO-, -OCO-, -OCOO-, -SCO-, -COS-, or -C=C- so that oxygen atoms are not directly bonded to each other).

Examples thereof include compounds described below, but are not limited to these.

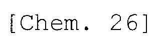

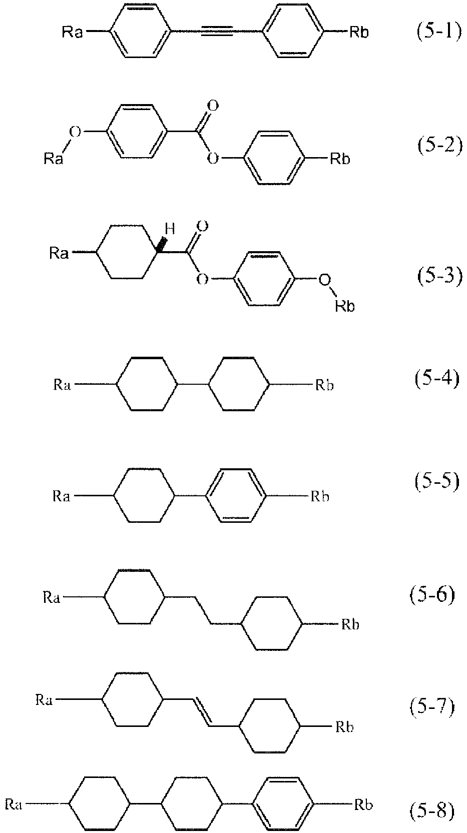

Ra and Rb each independently represent a hydrogen atom, an alkyl group having 1 to 6 carbon atoms, an alkoxy group having 1 to 6 carbon atoms, an alkenyl group having 1 to 6 carbon atoms, or a cyano group, and when Ra and Rb are each independently an alkyl group having 1 to 6 carbon atoms or an alkoxy group having 1 to 6 carbon atoms, it may be completely unsubstituted or substituted by one or two or more halogen atoms.

The total amount of the compound having a mesogenic group is preferably 0% by mass or more and 20% by mass or less relative to the total amount of the polymerizable liquid crystal composition. When the compound is used, the total content is preferably 1% by mass or more, 2% by mass or more, and 5% by mass or more, and 15% by mass or less and 10% by mass or less.

### (Chiral compound)

The polymerizable liquid crystal composition of the present invention may exhibit liquid crystallinity of a compound other than the polymerizable compound represented by the general formula (II) or may be non-liquid crystalline, and can also contain a polymerizable chiral compound.

The polymerizable chiral compound used in the present invention preferably has one or more polymerizable functional groups. Examples of such a compound include polymerizable chiral compounds each containing a chiral saccharide such as isosorbide, isomannite, glucoside, or the like and having a rigid part such as a 1,4-phenylene group, a 1,4-cyclohexylene group, or the like and a polymerizable functional group such as a vinyl group, an acryloyl group, a (meth)acryloyl group, or a maleimide group, as described in Japanese Unexamined Patent Application Publication No. 11-193287, Japanese Unexamined Patent Application Publication No. 2001-158788, Japanese Unexamined Patent Application Publication (Translation of PCT Application) No. 2006-52669, Japanese Unexamined Patent Application Publication No. 2007-269639, Japanese Unexamined Patent Application Publication Nos. 2007-269640 and 2009-84178, etc.; polymerizable chiral compounds each including a terpenoid derivative as described in Japanese Unexamined Patent Application Publication No. 8-239666; polymerizable chiral compounds each including a spacer having a mesogenic group and a chiral part as described in NATURE VOL. 35 P. 467-469 (issued on November 30, 1995), NATURE VOL. 392, P. 476-479 (issued on April 2, 1998) etc.; and polymerizable chiral compounds each containing a binaphthyl group as described in Japanese Unexamined Patent Application Publication (Translation of PCT Application) No. 2004-504285 and Japanese Unexamined Patent Application Publication No. 2007-248945. Among these, a chiral compound having high helical twisting power (HTP) is preferred for the polymerizable liquid crystal composition of the present invention.

The amount of the polymerizable chiral compound mixed is required to be appropriately adjusted according to the helical induction power of the compound, but the polymerizable liquid crystal composition preferably contains 0% to 25% by mass, more preferably 0% to 20% by mass, and particularly preferably 0% to 15% by mass of the chiral compound.

General examples of the polymerizable chiral compound include compounds represented by general formulae (3-1) to (3-4) below, but are not limited to these general formulae.

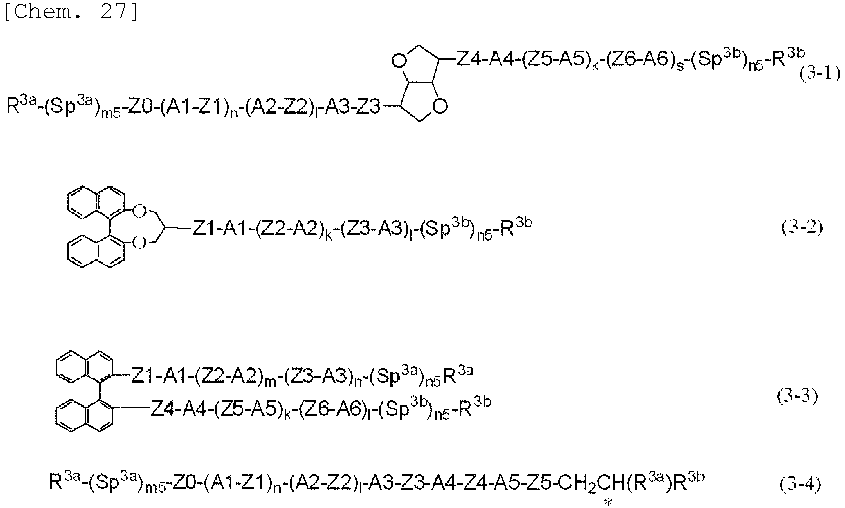

In the formulae, Sp^{3a} and Sp^{3b} each independently represent an alkylene group having 0 to 18 carbon atoms, which may be substituted by one or more halogen atoms, CN groups, or alkyl groups having 1 to 8 carbon atoms and a polymerizable functional group and in which one -CH₂- group or two or more unadjacent -CH₂- groups present in the alkyl group may be each independently substituted by -O-, -S-, - NH-, -N(CH₃)-, -CO-, -COO-, -OCO-, -OCOO-, -SCO-, -COS-, or -C=C- so that oxygen atoms are not directly bonded to each other;
A1, A2, A3, A4, and A5 each independently represent a 1,4-phenylene group, a 1,4-cyclohexylene group, 1,4-cyclohexenyl group, a tetrahydropyran-2,5-diyl group, a 1,3-dioxane-2,5-diyl group, a tatrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group; n, 1, and k each independently represent 0 or 1 and satisfy 0 ≤ n + l + k≤3; and
Z0, Z1, Z2, Z3, Z4, Z5, and Z6 each independently represent -COO-, -OCO-, -CH₂CH₂-, -OCH₂-, -CH₂O-, -CH=CH-, - C=C-, -CH=CHCOO-, -OCOCH=CH-, -CH₂CH₂COO-, -CH₂CH₂OCO-, - COOCH₂CH₂-, -OCOCH₂CH₂-, -CONH-, -NHCO-, an alkyl group having 2 to 10 carbon atoms, which may have a halogen atom, or a single bond; and
n5 and m5 each independently represent 0 or 1; and
R^{3a} and R^{3b} each independently represent a hydrogen atom, a halogen atom, a cyano group, or an alkyl group having 1 to 18 carbon atoms, which may be substituted by one or more halogen atoms or CN groups and in which one -CH₂- group or two or more unadjacent -CH₂- groups present in the alkyl group may be each independently substituted by -O-, -S-, - NH-, -N(CH₃)-, -CO-, -COO-, -OCO-, -OCOO-, -SCO-, -COS-, or -C≡C- so that oxygen atoms are not directly bonded to each other, or
R^{3a} and R^{3b} each independently represent a general formula (3-a)
[Chem. 28]

-P^{3a} (3-a)

(in the formula, P^{3a} represents a polymerizable functional group, and Sp^{3a} represents the same meaning as Sp¹); and
P^{3a} preferably represents a substituent selected from polymerizable groups represented by formula (P-1) to formula (P-20) below.

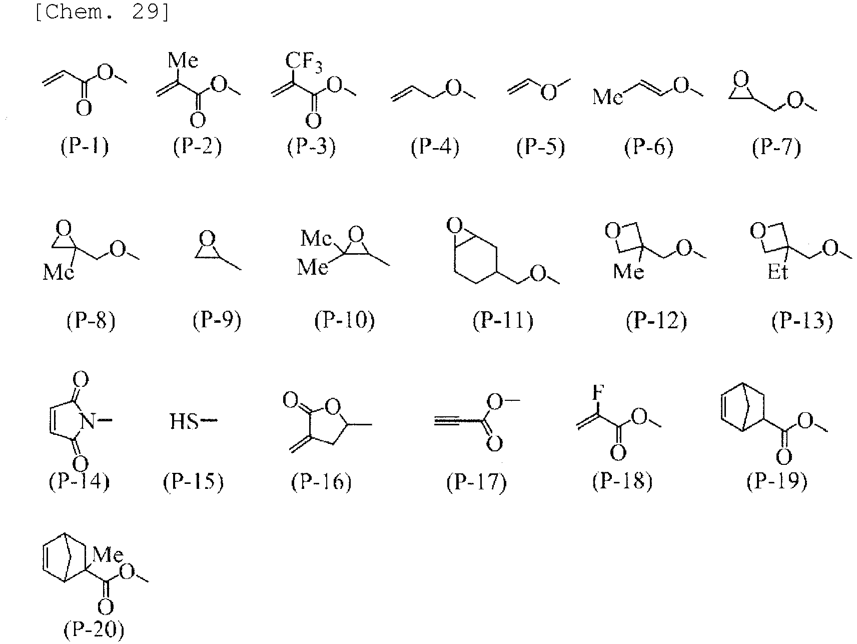

Among these polymerizable functional groups, the formulae (P-1) or (P-2), (P-7), (P-12), and (P-13) are preferred, and the formulae (P-1), (P-7), and (P-12) are more preferred from the viewpoint of enhancing polymerizability and storage stability.

Specific examples of the polymerizable chiral compound include, but are not limited to, compounds (3-5) to (3-25).

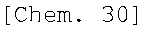

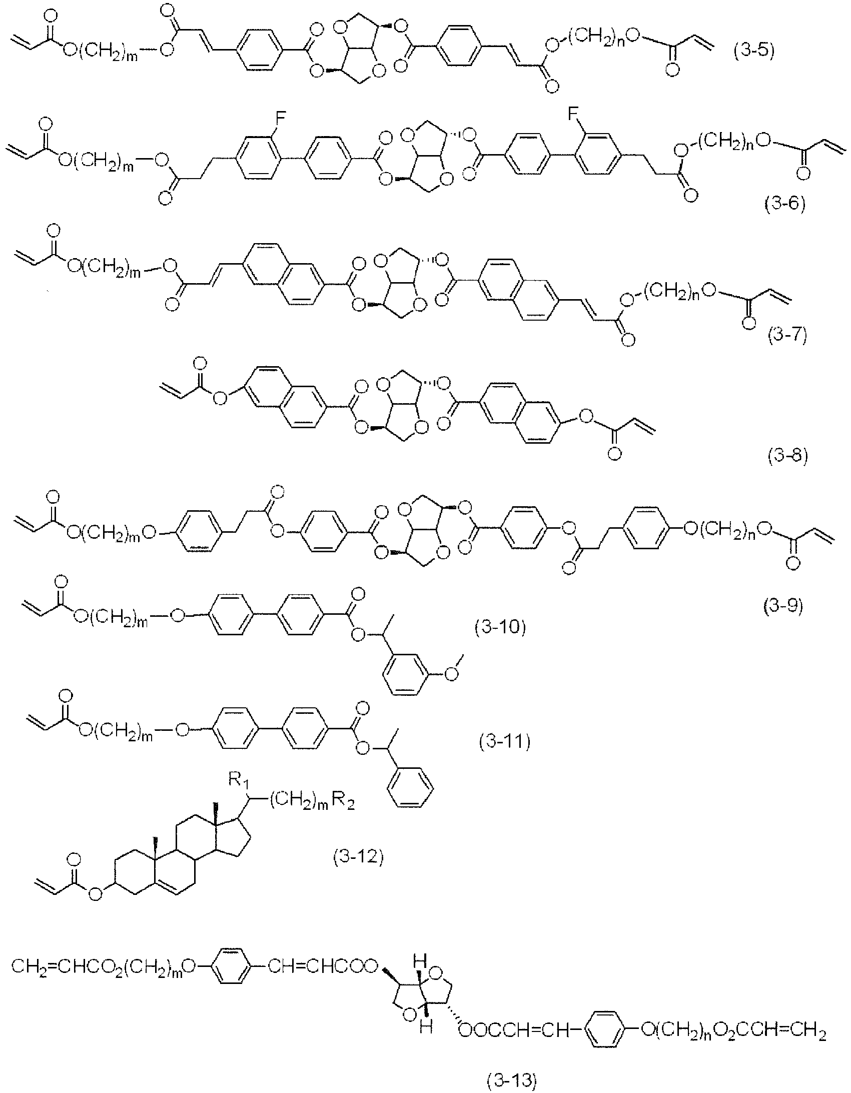

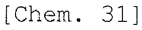

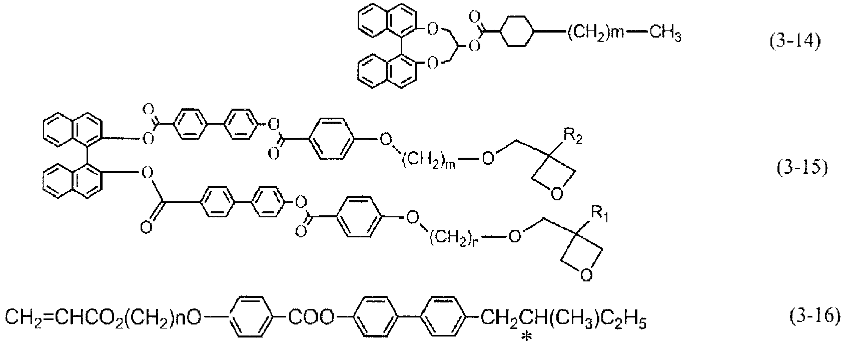

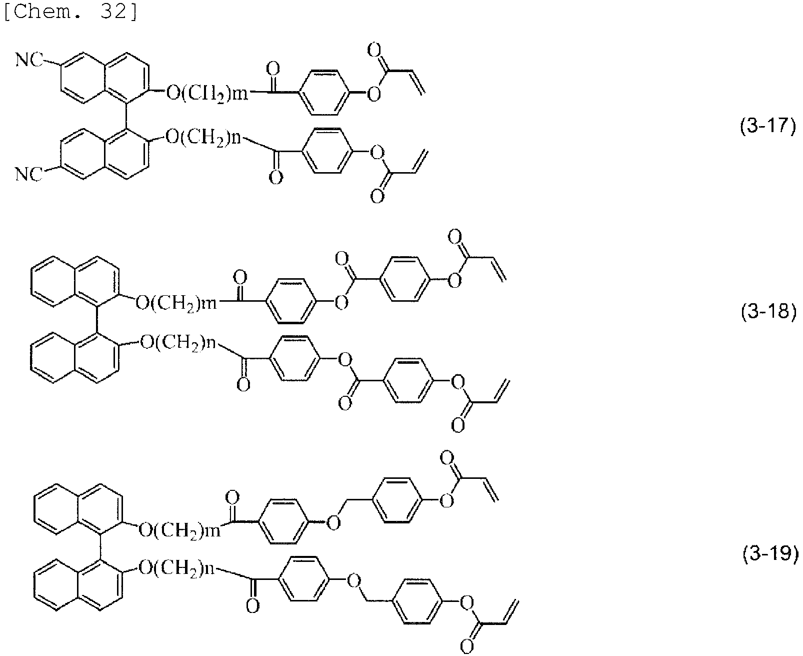

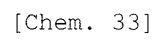

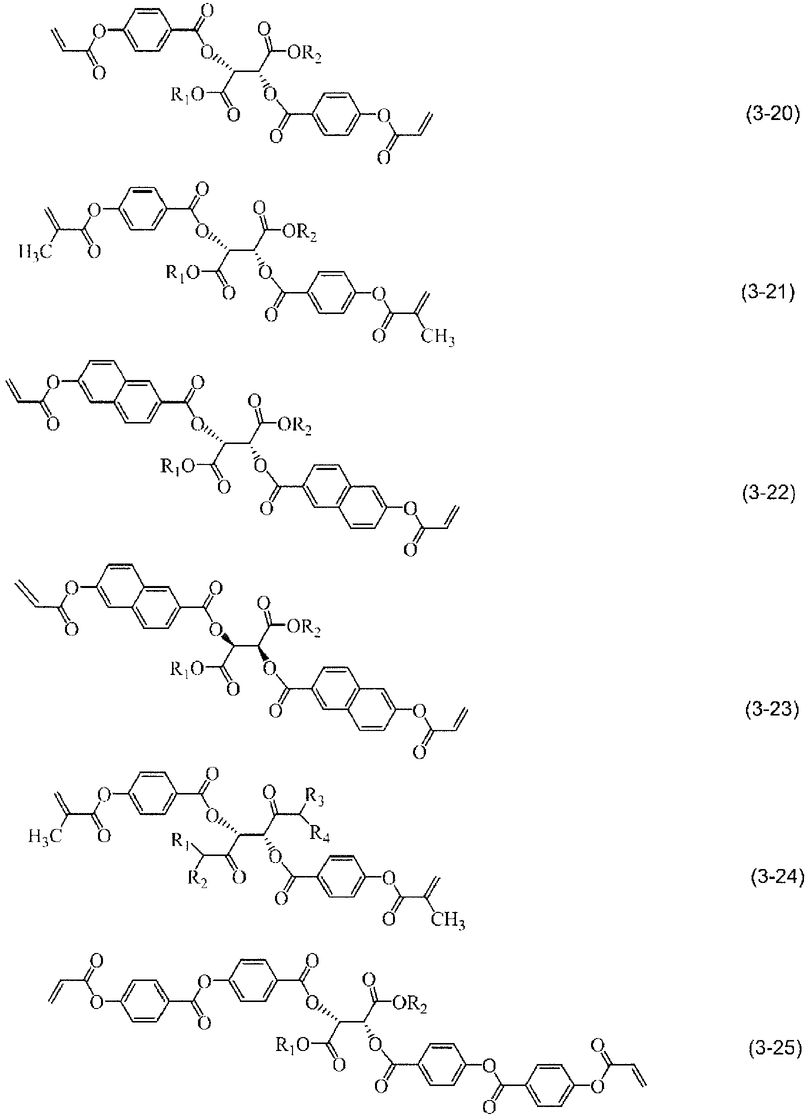

In the formulae, m, n, k, and 1 each independently represent an integer o 1 to 18, and R₁ to R₄ each independently represent a hydrogen atom, an alkyl group having 1 to 6 carbon atoms, an alkoxy group having 1 to 6 carbon atoms, a carboxy group, or a cyano group. When the groups are each an alkyl group having 1 to 6 carbon atoms or an alkoxy group having 1 to 6 carbon atoms, the groups may be each completely unsubstituted or substituted by one or two or more halogen atoms.

### (Polymerizable discotic compound)

The polymerizable liquid crystal composition of the present invention may exhibit liquid crystallinity of a compound other than the polymerizable compound represented by the general formula (II) or may be non-liquid crystalline, and can also contain a polymerizable discotic compound.

The polymerizable discotic compound used in the present invention preferably has one or more polymerizable functional groups. Examples of such a compound include polymerizable compounds described in Japanese Unexamined Patent Application Publication No. 7-281028, Japanese Unexamined Patent Application Publication No. 7-287120, Japanese Unexamined Patent Application Publication No. 7-333431, and Japanese Unexamined Patent Application Publication No. 8-27284.

The amount of the polymerizable discotic compound mixed is required to be appropriately adjusted according to the compound, but the polymerizable liquid crystal composition preferably contains 0% to 10% by mass of the compound.

General examples of the polymerizable discotic compound include compounds represented by general formulae (4-1) to (4-3) below, but are not limited to these general formulae.

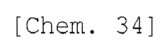

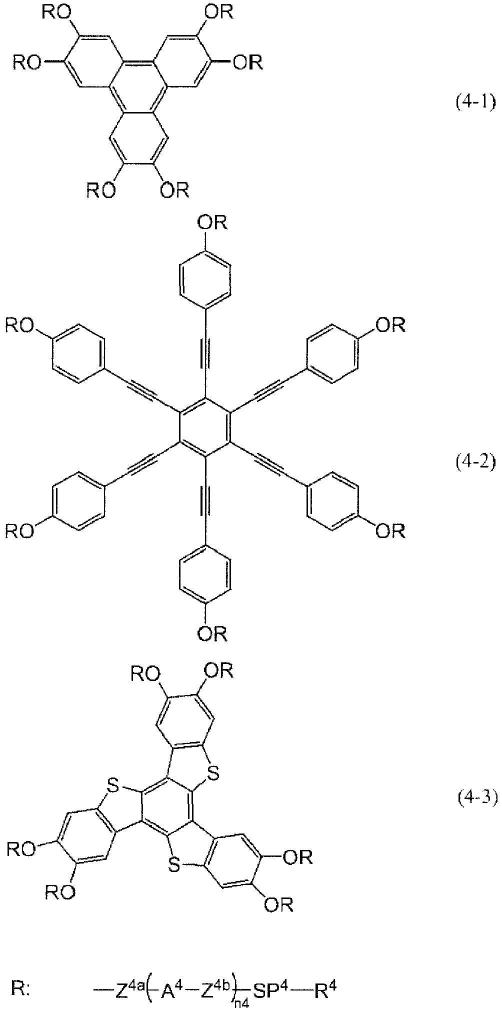

In the formulae, Sp⁴ represents an alkylene group having 0 to 18 carbon atoms, which may be substituted by one or more halogen atoms, CN groups, or alkyl groups having 1 to 8 carbon atoms and a polymerizable functional group and in which one -CH₂- group or two or more unadjacent -CH₂-groups present in the alkyl group may be each independently substituted by -O-, -S-, -NH-, -N(CH₃)-, -CO-, -COO-, -OCO-, -OCOO-, -SCO-, -COS-, or -C=C- so that oxygen atoms are not directly bonded to each other;
A⁴ represents a 1,4-phenylene group, a 1,4-cyclohexylene group, 1,4-cyclohexenyl group, a tetrahydropyran-2,5-diyl group, a 1,3-dioxane-2,5-diyl group, a tatrahydrothiopyran-2,5-diyl group, a 1,4-bicyclo(2,2,2)octylene group, a decahydronaphthalene-2,6-diyl group, a pyridine-2,5-diyl group, a pyrimidine-2,5-diyl group, a pyrazine-2,5-diyl group, a thiophene-2,5-diyl group, a 1,2,3,4-tetrahydronaphthalene-2,6-diyl group, a 2,6-naphthylene group, a phenanthrene-2,7-diyl group, a 9,10-dihydrophenanthrene-2,7-diyl group, a 1,2,3,4,4a,9,10a-octahydrophenanthrene-2,7-diyl group, a 1,4-naphthylene group, a benzo[1,2-b:4,5-b']dithiophene-2,6-diyl group, a benzo[1,2-b:4,5-b']diselenophene-2,6-diyl group, a [1]benzothieno[3,2-b]thiophene-2,7-diyl group, a [1]benzoselenopheno[3,2-b]selenophene-2,7-diyl group, or a fluorene-2,7-diyl group;
n5 represents 0 or 1;
Z^{4a} represents -CO-, -CH₂CH₂-, -CH₂O-, -CH=CH-, - CH=CHCOO-, -CH₂CH₂COO-, -CH₂CH₂OCO-, -COCH₂CH₂-, an alkyl group having 2 to 10 carbon atoms, which may have a halogen atom, or a single bond; and
Z^{4b} represents -COO-, -OCO-, -OCH₂-, -CH₂O-, -CH=CH-, - C=C-, -CH=CHCOO-, -OCOCH=CH-, -CH₂CH₂COO-, -CH₂CH₂OCO-, - COOCH₂CH₂-, -OCOCH₂CH₂-, -CONH-, -NHCO-, -OCOO-, an alkyl group having 2 to 10 carbon atoms, which may have a halogen atom, or a single bond; and
R⁴ represents a hydrogen atom, a halogen atom, a cyano group, or an alkyl group having 1 to 18 carbon atoms, which may be substituted by one or more halogen atoms or N groups and in which one -CH₂- group or two or more unadjacent -CH₂-groups present in the alkyl group may be each independently substituted by -O-, -S-, -NH-, -N(CH₃)-, -CO-, -COO-, -OCO-, -OCOO-, -SCO-, -COS-, or -C=C- so that oxygen atoms are not directly bonded to each other; or
R⁴ represents a general formula (4-a)
[Chem. 35]

-P^{4a} (4-a)

(in the formula, P^{4a} represents a polymerizable functional group, and Sp^{3a} represents the same meaning as Sp¹)
P^{4a} preferably represents a substituent selected from polymerizable groups represented by formula (P-1) to formula (P-20) below.

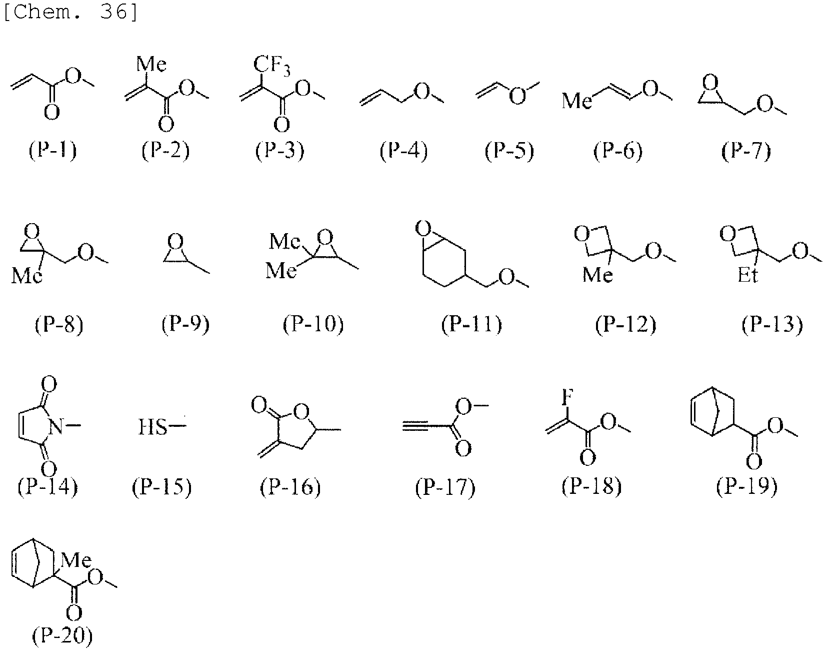

Among these polymerizable functional groups, the formulae (P-1) or (P-2), (P-7), (P-12), and (P-13) are preferred, and the formulae (P-1), (P-7), and (P-12) are more preferred from the viewpoint of enhancing polymerizability and storage stability.

Specific examples of the polymerizable discotic compound include, but are not limited to, compounds (4-4) to (4-8).

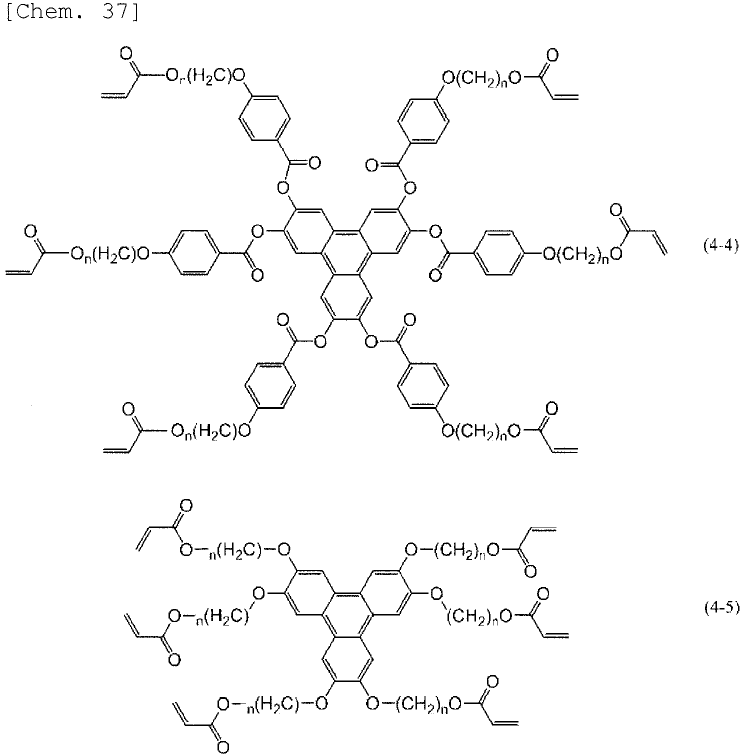

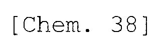

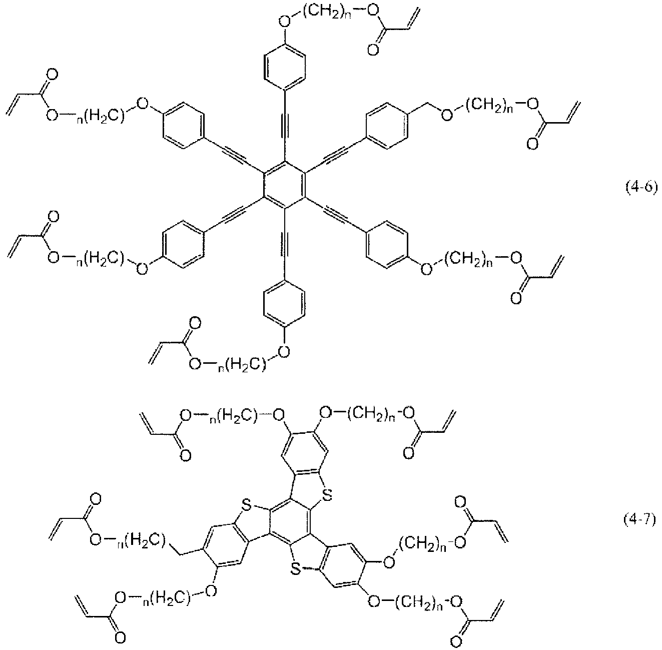

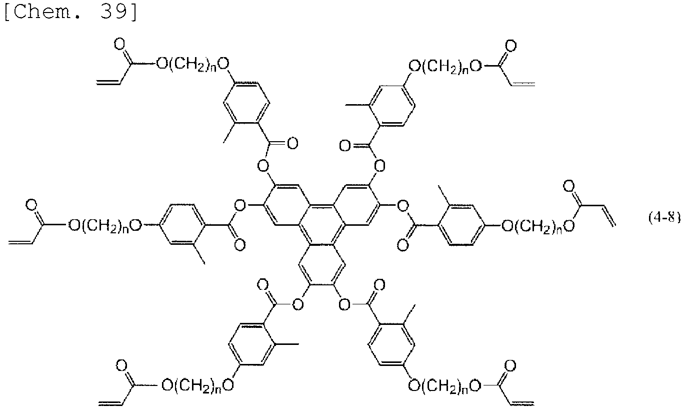

In the formulae, n represents an integer of 1 to 18.

### (Durability-imparting agent)

The polymerizable liquid crystal composition of the present invention is characterized by containing a durability-imparting agent. The term "durability-imparting agent" represents a compound used by adding to the polymerizable liquid crystal composition and capable of improving the durability of a coating film produced by applying the polymerizable liquid crystal composition on a substrate and then heating or irradiating active energy rays. A specific example of the curability-imparting agent is a compound (III) having three or more aromatic rings at least one of which is substituted by an alkyl group having 1 to 5 carbon atoms or an alkoxy group having 1 to 5 carbon atoms.

In this case, even when the compound (III) having two aromatic rings is used, the compound does not contribute to improvement in durability of a coating film, and even when the compound having three or more aromatic rings which have no substituent is used, the compound does not contribute to improvement in durability of a coating film. Therefore, it is important for the compound (III) to be a compound having three or more aromatic rings at least one of which has the substituent described above.

The aromatic rings are preferably each independently an aromatic ring such as five-membered ring or six-membered ring, and all aromatic rings are more preferably six-membered aromatic rings.

The compound (III) is preferably a compound further having a phosphorus atom or sulfur atom. Specific examples of the compound (III) include, but are not limited to, compounds represented by general formula (III-1-1) and general formula (III-1-2) below.

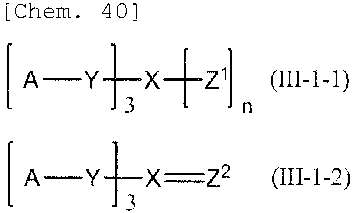

(In the formulae, X represents a phosphorus atom or a sulfur atom,
n represents 0 or 2, and when X is a phosphorus atom, n represents 2, and when X is a sulfur atom, n represents 0,
Y represents -CO-, -NH-, -O-, or a single bond, and when a plurality of Y are present, Y may be the same or different,
A represents an aromatic ring which may have a substituent, and when a plurality of A are present, A may be the same or different, but at least one of A is a group in which at least one hydrogen atom is substituted by an alkyl group having 1 to 5 carbon atoms or an alkoxy group having 1 to 5 carbon atoms, and
Z¹ represents a fluorine atom, and Z² represents an oxygen atom or a NH group in which a hydrogen atom in the NH group is substituted by an aromatic ring which may have one or more substituents.)
When Z² represents a NH group in which a hydrogen atom in the NH group is substituted by an aromatic ring which may have a substituent, the aromatic ring is preferably a five-membered or six-membered aromatic ring and more preferably a six-membered aromatic ring. When the aromatic ring has one or more substituents, the substituents are preferably each an alkyl group having 1 to 5 carbon atoms or an alkoxy group having 1 to 5 carbon atoms.

More specific examples of the compound represented by the general formula (III-1-1) or general formula (III-1-2) include, but are not limited to, compounds represented by general formula (III-2-1), general formula (III-2-2), and general formula (III-2-3) below.

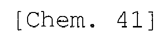

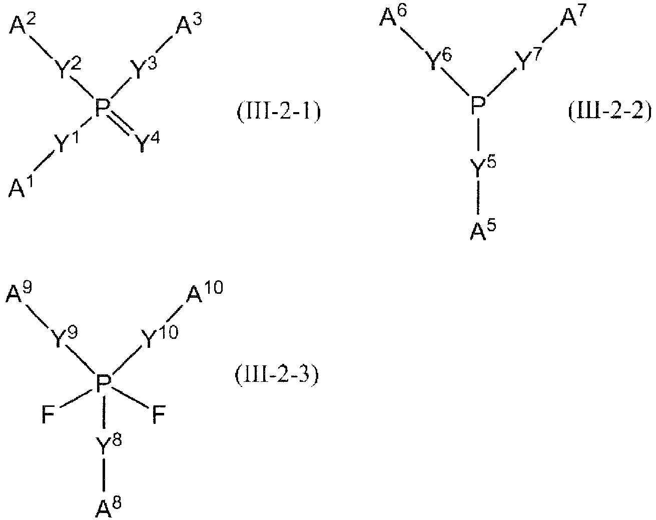

(In the formulae, P represents a phosphorus atom,
Y⁴ represents a NH group, a nitrogen atom, or an oxygen atom (wherein when Y⁴ represents a NH group, a hydrogen atom in the NH group may be substituted by an aromatic ring A⁴ which may have a substituent),
Y¹ to Y³, Y⁵ to Y⁷, and Y⁸ to Y¹⁰ each independently represent -CO-, -NH-, -O-, or a single bond,
A¹ to A¹⁰ each independently represent an aromatic ring, at least one of A¹ to A⁴ is an aromatic ring in which at least one hydrogen atom in a =CH- group of the aromatic ring is substituted by an alkyl group having 1 to 5 carbon atoms or an alkoxy group having 1 to 5 carbon atoms, at least one of A⁵ to A⁷ is an aromatic ring in which at least one hydrogen atom in a =CH- group of the aromatic ring is substituted by an alkyl group having 1 to 5 carbon atoms or an alkoxy group having 1 to 5 carbon atoms, and at least one of A⁸ to A¹⁰ is an aromatic ring in which at least one hydrogen atom in a =CH- group of the aromatic ring is substituted by an alkyl group having 1 to 5 carbon atoms or an alkoxy group having 1 to 5 carbon atoms.)

When Y⁴ represents a NH group in which a hydrogen atom in the NH group is substituted by an aromatic ring which may have a substituent, the aromatic ring is preferably a five-membered or six-membered aromatic ring and more preferably a six-membered aromatic ring. When the aromatic ring has one or more substituents, the substituents are preferably each an alkyl group having 1 to 5 carbon atoms or an alkoxy group having 1 to 5 carbon atoms, and more preferably each an alkyl group having 1 to 3 carbon atoms or an alkoxy group having 1 to 3 carbon atoms.

Also, at least one of A¹ to A⁴ is an aromatic ring in which at least one hydrogen atom in a =CH- group of the aromatic ring is preferably substituted by an alkyl group having 1 to 3 carbon atoms or an alkoxy group having 1 to 3 carbon atoms, and at least two hydrogen atoms in a =CH-group of the aromatic ring are more preferably substituted. Similarly, at least one of A⁵ to A⁷ is an aromatic ring in which at least one hydrogen atom in a =CH- group of the aromatic ring is preferably substituted by an alkyl group having 1 to 3 carbon atoms or an alkoxy group having 1 to 3 carbon atoms, and at least two hydrogen atoms in a =CH-group of the aromatic ring are more preferably substituted. Further similarly, at least one of A⁸ to A¹⁰ is an aromatic ring in which at least one hydrogen atom in a =CH- group of the aromatic ring is preferably substituted by an alkyl group having 1 to 3 carbon atoms or an alkoxy group having 1 to 3 carbon atoms, and at least two hydrogen atoms in a =CH-group of the aromatic ring are more preferably substituted.

More specific examples of the compound (III) include, but are not limited to, compounds represented by formula (III-3-1) to general formula (III-3-5) below.

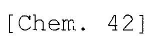

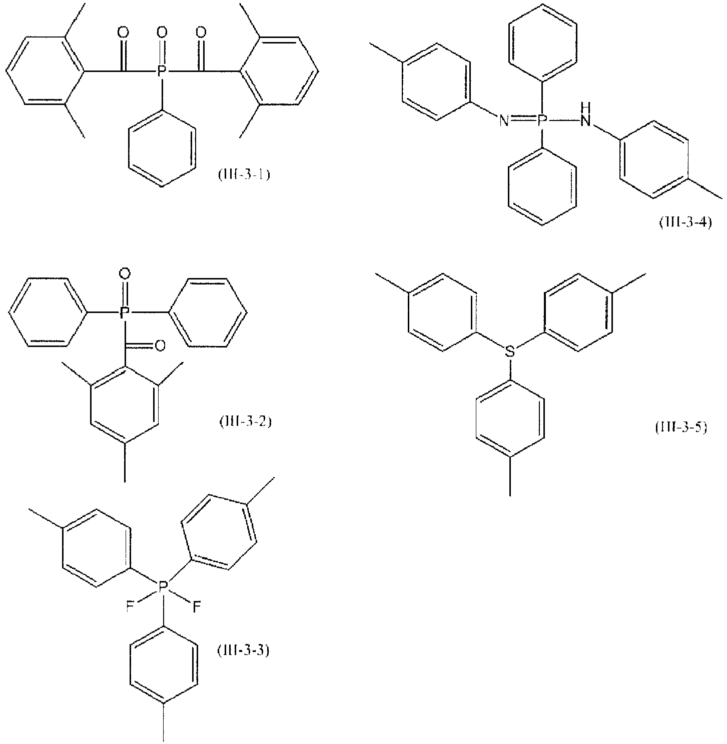

The durability-imparting agents described above can be used alone or as a mixture of two or more.

The content of the durability-imparting agent is preferably 0.05 to 15 parts by mass, more preferably 0.05 to 12 parts by mass, still more preferably 0.1 to 10 parts by mass, even more preferably 0.5 to 8 parts by mass, and particularly preferably 0.5 to 6 parts by mass relative to 100 parts by mass of the total amount of polymerizable liquid crystal compounds contained in the polymerizable liquid crystal composition. When the content of the durability-imparting agent contained in the polymerizable liquid crystal composition is within a specific range, even the polymerizable liquid crystal composition containing a polymerizable liquid crystal compound having one polymerizable functional group in its molecule as the polymerizable liquid crystal compound can produce a film having durability equivalent to that of a film formed by using a polymerizable liquid crystal composition not containing a polymerizable liquid crystal compound having one polymerizable functional group in its molecule.

### (Organic solvent)

An organic solvent may be added to the polymerizable liquid crystal composition of the present invention. The organic solvent used is not particularly limited but is preferably an organic solvent in which a polymerizable liquid crystal compound exhibits good solubility and preferably an organic solvent which can be dried at a temperature of 100°C or less. Examples of the organic solvent include aromatic hydrocarbons such as toluene, xylene, cumene, mesitylene, and the like; ester solvents such as methyl acetate, ethyl acetate, propyl acetate, butyl acetate, and the like; ketone solvents such as methyl ethyl ketone, methyl isobutyl ketone, cyclohexanone, cyclopentanone, and the like; ether solvents such as tetrahydrofuran, 1,2-dimethoxyethane, anisole, and the like; amide solvents such as N,N-dimethylformamide, N-methyl-2-prrolidone, and the like; propylene glycol monomethyl ether acetate; diethylene glycol monomethyl ether acetate; γ-butyrolactone; chlorobenzene; and the like. These can be used alone or as a mixture of two or more, but any one or more of the ketone solvents, the ether solvents, the ester solvents, and the aromatic hydrocarbon solvents is preferably used in view of solution stability.

A solution of the composition used in the present invention in the organic solvent can be applied on a substrate, and the ratio of the organic solvent used in the polymerizable liquid crystal composition is not particularly limited as long as the coated state is not significantly impaired, but the total amount of the organic solvent contained in the polymerizable liquid crystal composition is preferably 10% to 95% by mass, more preferably 12% to 90% by mass, and particularly preferably 15% to 85% by mass.

When the polymerizable liquid crystal composition is dissolved in the organic solvent, heating and stirring is preferably performed for uniformly dissolving the composition. The heating temperature during heating and stirring may be properly adjusted in consideration of solubility of the composition used in the organic solvent, but is preferably 15°C to 110°C, more preferably 15°C to 105°C, still more preferably 15°C to 100°C, and particularly preferably 20°C to 90°C in view of productivity.

Also, when the solvent is added, stirring and mixing is preferably performed by using a dispersion stirrer. Examples of the dispersion stirrer include a disperser having a stirring blade such as a disper, a propeller, a turbine blade, or the lie, a paint shaker, a planetary stirring device, a shaking device, a shaker, a rotary evaporator, and the like. Besides these, an ultrasonic irradiation device can be used.

The number of stirring rotations at the time of addition of the solvent is preferably properly adjusted according to the stirring device used, but in order to prepare a uniform solution of the polymerizable liquid crystal composition, the number of stirring rotations is preferably 10 rpm to 1000 rpm, more preferably 50 rpm to 800 rpm, and particularly preferably 150 rpm to 600 rpm.

### (Polymerization inhibitor)

A polymerization inhibitor is preferably added to the polymerizable liquid crystal composition of the present invention. Examples of the polymerization inhibitor include a phenol-based compound, a quinone-based compound, an amine-based compound, a thioether-based compound, a nitroso compound, and the like.

Examples of the phenol-based compound include p-methoxyphenol, cresol, tert-butyl catechol, 3,5-di-tert-butyl-4-hydroxytoluene, 2,2'-methylenebis(4-methyl-6-tertbutylphenol), 2,2'-methylenebis(4-ethyl-6-tert-butylphenol), 4,4'-thiobis(3-methyl-6-tert-butylphenol), 4-methoxy-1-naphthol, 4,4'-dialkoxy-2,2'-bi-1-naphthol, and the like.

Examples of the quinone-based compound include hydroquinone, methylhydroquinone, tert-butylhydroquinone, p-benzoquinone, methyl-p-benzoquinone, tert-butyl-p-benzoquinone, 2,5-diphenylbenzoquinone, 2-hydroxy-1,4-naphthoquinone, 1,4-naphthoquinone, 2,3-dichloro-1,4-naphthoquinone, anthraquinone, diphenoquinone, and the like.

Examples of the amine-based compound include p-phenylenediamine, 4-aminodiphenylamine, N,N'-diphenyl-p-phenylenediamine, N-i-propyl-N'-phenyl-p-phenylenediamine, N-(1,3-dimethylbutyl)-N'-phenyl-p-phenylenediamine, N,N'-di-2-naphthyl-p-phenylenediamine, diphenylamine, N-phenyl-β-naphthylamine, 4,4'-dicumyl-diphenylamine, 4,4'-dioctyldiphenylamine, and the like.

Examples of the thioether-based compound include phenothiazine, distearyl thiodipropionate, and the like.

Examples of the nitroso compound include N-nitrosodiphenylamine, N-nitrosophenylnaphthylamine, N-nitrosodinaphthylamine, p-nitrosophenol, nitrosobenzene, p-nitrosodiphenylamine, α-nitroso-β-naphthol, N,N-dimethyl-p-nitrosoaniline, p-nitrosodiphenylamine, p-nitrosodimethylamine, p-nitroso-N,N-diethylamine, N-nitrosoethanolamine, N-nitroso-di-n-butylamine, N-nitroso-N-n-butyl-4-butanolamine, N-nitrosodiisopropanolamine, N-nitroso-N-ethyl-4-butanolamine, 5-nitroso-8-hydroxyquinoline, N-nitrosomorpholine, N-nitroso-N-phenylhydroxyamine ammonium salt, nitrosobenzene, 2,4.6-tri-tert-butylnitrosobenzene, N-nitroso-N-methyl-p-toluene sulfonamide, N-nitroso-N-ethylurethane, N-nitroso-N-n-propylurethane, 1-nitroso-2-naphthol, 2-nitroso-1-naphthol, sodium 1-nitroso-2-naphthol-3,6-sulfonate, sodium 2-nitroso-1-naphthol-4-sulfonate, 2-nitroso-5-methylaminophenol hydrochloride, 2-nitroso-5-methylaminophenol hydrochloride, and the like.

The amount of the polymerization inhibitor added is preferably 0.01% to 1.0% by mass and more preferably 0.05% to 0.5% by mass relative to the polymerizable liquid crystal composition.

### (Photopolymerization initiator)

The polymerizable liquid crystal composition of the present invention preferably contains a photopolymerization initiator. At least one photopolymerization initiator is preferably contained. Examples thereof include "Irgacure 651", "Irgacure 184", "Irgacure 907", "Irgacure 127", "Irgacure 369", "Irgacure 2959", "Irgacure 1800", "Irgacure 250", "Irgacure 754", "Darocur MBF", and "Darocur 1173" manufactured by BASF Japan Co., Ltd., "Esacure 1001M", "Esacure KIP150", "Speedcure BEM", "Speedcure BMS", "Speedcure MBP", "Speedcure PBZ", "Speedcure ITX", "Speedcure DETX", "Speedcure EBD", "Speedcure MBB", and "Speedcure BP" manufactured by LAMBSON Ltd., "Kayacure DMBI" manufactured by Nippon Kayaku Co., Ltd., and the like.

The amount of the photopolymerization initiator used is preferably 0.1% to 10% by mass and more preferably 0.5% to 7% by mass relative to the polymerizable liquid crystal composition. These can be used alone or as a mixture of two or more, and a sensitizer or the like may be added.

### (Thermopolymerization initiator)

The polymerizable liquid crystal composition of the present invention may contain a thermopolymerization initiator used in combination of the photopolymerization initiator. Examples thereof include "V-40" and "VF-096" manufactured by Wako Pure Chemical Industries, Ltd., "Perhexyl D" and "Perhexyl I" manufactured by NOF Corporation, and the like.

The amount of the thermopolymerization initiator used is preferably 0.1% to 10% by mass and more preferably 0.5% to 5% by mass relative to the polymerizable liquid crystal composition. These can be used alone or as a mixture of two or more.

### (Surfactant)

The polymerizable liquid crystal composite of the present invention may contain at least one surfactant for decreasing thickness unevenness of the optically anisotropic body formed. Examples of the surfactant which can be contained include alkylcarboxylic acid salts, alkylphosphoric acid salts, alkylsulfonic acid salts, fluoroalkylcarboxylic acid salts, fluoroalkylphosphoric acid salts, fluoroalkylsulfonic acid salts, polyoxyethylene derivatives, fluoroalkylethylene oxide derivatives, polyethylene glycol derivatives, alkylammonium salts, fluoroalkylammonium salts, and the like, and a fluorine-containing surfactant is particularly preferred.

Specific examples thereof include "Megaface F-251", "Megaface F-444", "Megaface F-477", "Megaface F-510", "Megaface F-552", "Megaface F-553", "Megaface F-554", "Megaface F-555", "Megaface F-556", "Megaface F-557", "Megaface F-558", "Megaface F-559", "Megaface F-560", "Megaface F-561", "Megaface F-562", "Megaface F-563", "Megaface F-565", "Megaface F-567", "Megaface F-568", "Megaface F-569", "Megaface F-570", "Megaface F-571", "Megaface R-40", "Megaface R-41", "Megaface R-43", "Megaface R-94", "Megaface RS-72-K", "Megaface RS-75", "Megaface RS-76-E", and "Megaface RS-90" (the above are manufactured by DIC Corporation);
"Ftargent 100", "Ftargent 100C", "Ftargent 110", "Ftargent 150", "Ftargent 150CH", "Ftargent A", "Ftargent 100A-K", "Ftargent 501", "Ftargent 300", "Ftargent 310", "Ftargent 320", "Ftargent 400SW", "FTX-400P", "Ftargent 251", "Ftargent 215M", "Ftargent 212MH", "Ftargent 250", "Ftargent 222F", "Ftargent 212D", "FTX-218", "FTX-209F", "FTX-213F", "FTX-233F", "Ftargent 245F", "FTX-208G", "FTX-240G", "FTX-206D", "FTX-220D", "FTX-230D", "FTX-240D", "FTX-207S", "FTX-211S", "FTX-220S", "FTX-230S", "FTX-750FM", "FTX-730FM", "FTX-730FL", "FTX-710FS", "FTX-710FM", "FTX-710FL", "FTX-750LL", "FTX-730LS", "FTX-730LM", "FTX-730LL", and "FTX-710LL" (the above are manufactured by Neos Co., Ltd.);
"BYK-300", "BYK-302", "BYK-306", "BYK-307", "BYK-310", "BYK-315", "BYK-320", "BYK-322", "BYK-323", "BYK-325", "BYK-330", "BYK-331", "BYK-333", "BYK-337", "BYK-340", "BYK-344", "BYK-370", "BYK-375", "BYK-377", "BYK-350", "BYK-352", "BYK-354", "BYK-355", "BYK-356", "BYK-358N", "BYK-361N", "BYK-357", "BYK-390", "BYK-392", "BYK-UV3500", "BYK-UV3510", "BYK-UV3570", and "BYK-Silclean3700" (the above are manufactured by BYK Chemie Japan KK);
"TEGO Rad2100", "TEGO Rad2200N", "TEGO Rad2250", "TEGO Rad2300", "TEGO Rad2500", "TEGO Rad2600", and "TEGO Rad2700" (the above are manufactured by Tego Corporation);
"N215", "N535", "N605K", and "N935" (the above are manufactured by Solvay Solexis Inc.); and the like.

The amount of the surfactant added is preferably 0.01% to 2% by mass and more preferably 0.05% to 0.5% by mass relative to the polymerizable composition.

Also, when an optically anisotropic body is formed by using the polymerizable liquid crystal composition of the present invention, the tilt angle at an air interface can be effectively decreased by using the surfactant.

When an optically anisotropic body is formed by using the polymerizable liquid crystal composition of the present invention, other than the surfactants described above, a surfactant having the effect of effectively decreasing a tilt angle at an air interface is, for example, a compound having a weight-average molecular weight of 100 or more and a repeating unit represented by general formula (7) below.

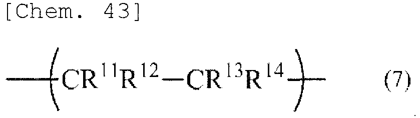

In the formula, R¹¹, R¹², R¹³, and R¹⁴ each independently represent a hydrogen atom, a halogen atom, or a hydrocarbon group having 1 to 20 carbon atoms, and hydrogen atoms in the hydrocarbon group may be substituted by one or more halogen atoms.

Preferred Examples of the compound represented by the general formula (7) include polyethylene, polypropylene, polyisobutylene, paraffin, liquid paraffin, chlorinated polypropylene, chlorinated paraffin, chlorinated liquid paraffin, and the like.

The amount of the compound added and represented by the general formula (7) is preferably 0.01% to 1% by mass and more preferably 0.05% to 0.5% by mass relative to the polymerizable liquid crystal composition.

### (Chain transfer agent)

When an optically anisotropic body is formed by using the polymerizable liquid crystal composition of the present invention, a chain transfer agent is preferably also added for further improving adhesion to a substrate. The chain transfer agent is preferably a thiol compound, more preferably a monothiol, dithiol, trithiol, or tetrathiol compound, and till more preferably a trithiol compound. Preferred examples thereof include compounds represented by general formulae (8-1) to (8-12) below.

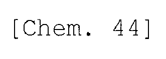

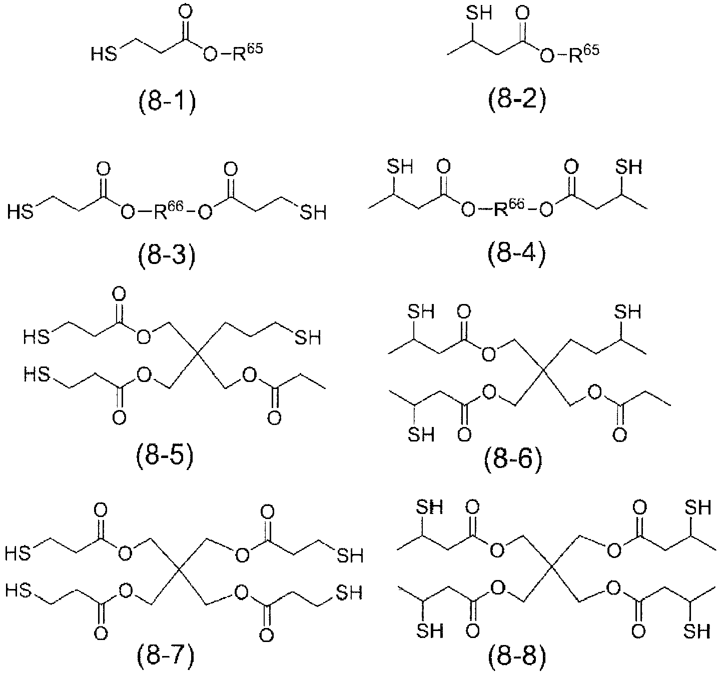

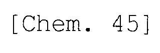

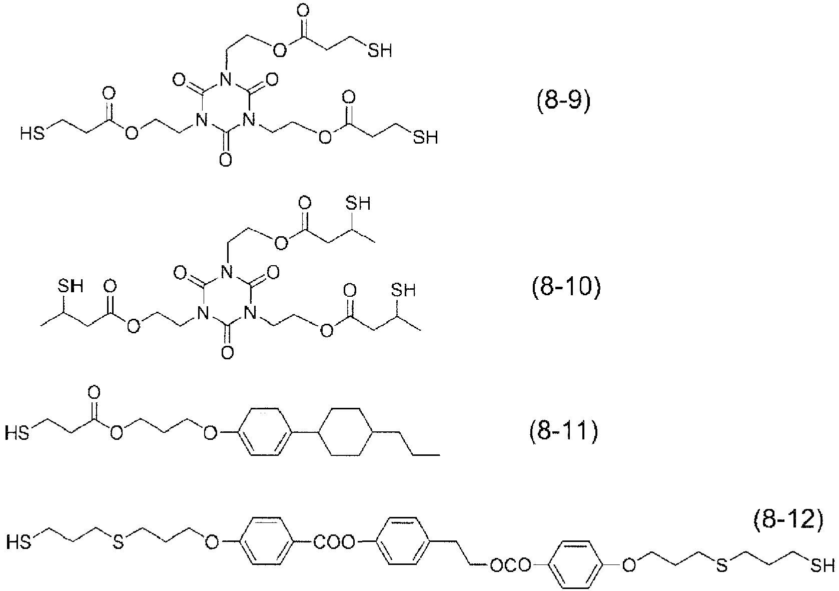

In the formulae, R⁶⁵ represents an alkyl group having 2 to 18 carbon atoms which may have a linear or branched chain and in which one or more methylene groups in the alkyl group may be each independently substituted by an oxygen atom, a sulfur atom, -CO-, -OCO-, -COO-, or -CH=CH- so that oxygen atoms or sulfur atoms are not directly bonded to each other, and R⁶⁶ represents an alkylene group having 2 to 18 carbon atoms in which one or more methylene groups in the alkylene group may be each independently substituted by an oxygen atom, a sulfur atom, -CO-, -OCO-, -COO-, or -CH=CH- so that oxygen atoms or sulfur atoms are not directly bonded to each other.

The amount of the chain transfer agent added is preferably 0.5% to 10% by mass and more preferably 1.0% to 5.0% by mass relative to the polymerizable liquid crystal composition.

### (Other additives)

In order to further adjust the physical properties, additives such as a polymerizable compound without liquid crystallinity, a tixotropic agent, an ultraviolet absorber, an infrared absorber, an antioxidant, a surface treating agent, and the like can be added according to purpose in a degree which does not significantly impair the liquid crystal alignment ability.

### (Method for producing optically anisotropic body)

### (Optically anisotropic body)

An optically anisotropic body produced by using the polymerizable liquid crystal composition of the present invention includes a substrate, if required, an alignment film, and a polymer of the polymerizable liquid crystal composition which are laminated in order.

### (Substrate)

The substrate used in the optically anisotropic body of the present invention is not particularly limited as long as it is a substrate generally used for a liquid crystal device, a display, an optical component, and an optical film and it is a material having heat resistance to heating during drying after application of the polymerizable liquid crystal composition of the present invention of the present invention. Examples of the substrate include a glass substrate, a metal substrate, a ceramic substrate, organic substrates such as a plastic substrate, and the like. In particular, when the substrate is made of an organic material, examples of the material include cellulose derivatives, polyolefin, polyester, polycarbonate, polyacrylate (acrylic resin), polyarylate, polyethersulfone, polyimide, polyphenylene sulfide, polyphenylene ether, nylon, polystyrene, and the like. Among these, plastic substrates such as polyester, polystyrene, polyacrylate, polyolefin, cellulose derivatives, polyarylate, polycarbonate, and the like are preferred, and substrates such as polyacrylate, polyolefin, cellulose derivatives, and the like are more preferred. It is particularly preferred to use COP (cycloolefin polymer) as polyolefin, TAC (triacetyl cellulose) as a cellulose derivative, and PMMA (polymethyl methacrylate) as polyacrylate. The shape of the substrate may be a plate shape or a shape having a curved surface. If required, the substrate may have an electrode layer, an anti-reflection function, and a reflection function.

In order to improve coating properties and adhesion of the polymerizable liquid crystal composition of the present invention, the substrate may be surface-treated. Examples of surface treatment include ozone treatment, plasma treatment, corona treatment, and silane coupling treatment, and the like. Also, in order to adjust light transmittance and reflectance, an organic thin film, an inorganic oxide thin film, a metal thin film, or the like is provided on a surface of the substrate by vapor deposition. Alternatively, in order to impart an optical added value, the substrate may be a pickup lens, a rod lens, an optical disk, a retardation film, a light diffusion film, a color filter, or the like. In particular, a pickup lens, a retardation film, a light diffusion film, or a color filter is preferred because the added value is further enhanced.

### (Alignment treatment)

Also, the substrate is generally subjected to alignment treatment or an alignment film may be provided so that the polymerizable liquid crystal composition of the present invention is aligned when the polymerizable liquid crystal composition is applied and dried. Examples of the alignment treatment include stretching treatment, rubbing treatment, polarized ultraviolet/visible light irradiation treatment, ion beam treatment, and the like. When an alignment film is used, a known common alignment film is used. Examples of the alignment film include films of polyimide, polysiloxane, polyamide, polyvinyl alcohol, polycarbonate, polystyrene, polyphenylene ether, polyarylate, polyethylene terephthalate, polyethersulfone, epoxy resins, epoxyacrylate resins, acrylic resins, coumarin compounds, chalcone compounds, cinnamate compounds, fulgide compounds, anthraquinone compounds, azo compounds, arylethene compounds, and the like. A compound subjected to alignment treatment by rubbing is preferably such that crystallinity of the material used is accelerated by alignment treatment or a heating step added after alignment treatment. A compound subjected to alignment treatment other than rubbing is preferably a photo-alignment material.

### (Coating)

Examples of an application method which can be used for producing the optically anisotropic body of the present invention include known common methods such as an applicator method, a bar coating method, a spin coating method, a roll coating method, a direct gravure coating method, a reverse gravure coating method, a flexo coating method, an ink jet method, a die coating method, a cap coating method, a dip coating method, a slit coating method, and the like. If required, the polymerizable liquid crystal composition is dried after being applied.

An operation of polymerizing the polymerizable liquid crystal composition of the present invention is generally performed by irradiation with light such as ultraviolet light or the like or heating under a condition in which a liquid crystal compound in the polymerizable liquid crystal composition is in a horizontal alignment, vertical alignment, hybrid alignment, or cholesteric alignment (planar alignment) state with respect to the substrate. When polymerization is performed by light irradiation, specifically, ultraviolet light of 390 nm or less is preferably irradiated, and ultraviolet light with a wavelength of 250 to 370 nm is most preferably irradiated. However, when decomposition of the polymerizable liquid crystal composition is caused by ultraviolet light of 390 nm or less, polymerization with ultraviolet light of 390 nm or more may be preferred. The light is preferably diffused light and unpolarized light.

### (Polymerization method)

Examples of a method for polymerizing the polymerizable liquid crystal composition of the present invention include a method of irradiating active energy rays, a thermal polymerization method, and the like, but the method of irradiating active energy rays is preferred because heating is not required and reaction proceeds at room temperature, and the method of irradiating light such as ultraviolet light or the like is particularly preferred because of a simple operation.

The temperature of irradiation is a temperature at which a liquid crystal phase of the polymerizable liquid crystal composition of the present invention can be maintained, and is preferably 30°C or less as much as possible in order to avoid induction of thermal polymerization of the polymerizable liquid crystal composition. In a temperature-rising process, a liquid crystal composition generally shows a liquid crystal phase within a temperature range of C (solid phase)-N (nematic) transition temperature (hereinafter abbreviated as a "C-N transition temperature") to a N-I transition temperature. On the other hand, in a temperature-falling process, a liquid crystal state may be maintained without solidification even at a temperature equal to or lower than the C-N transition temperature in order to take a thermodynamic non-equilibrium state. This state is referred to as a "super-cooled state". In the present invention, the liquid crystal composition in the super-cooled state is included in the state of maintaining a liquid crystal phase. Specifically, irradiation with ultraviolet light of 390 nm or less is preferred, and irradiation with light at a wavelength of 250 to 370 nm is most preferred. However, when decomposition of the polymerizable liquid crystal composition is caused by ultraviolet light of 390 nm or less, polymerization by ultraviolet light of 390 nm or more may be preferred. The light is preferably diffused light and unpolarized light. The ultraviolet irradiation intensity is preferably within a range of 0.05 kW/^{m2} to 10 kW/m², and particularly preferably within a range of 0.2 kW/m² to 2 kW/m². With the ultraviolet intensity of less than 0.05 kW/m², much time is required for completing polymerization. While with the intensity exceeding 2 kW/m², liquid crystal molecules in the polymerizable liquid crystal composition tend to be optically decomposed, and the order parameter of a polymerizable liquid crystal is changed by an increase in temperature during polymerization due to the generation of much polymerization heat, and thus retardation of a film after polymerization may be deviated.

Also, after polymerization by ultraviolet irradiation of only a specified portion using a mask, the alignment state of an unpolymerized portion may be changed by applying an electric field, a magnetic field, a temperature, or the like, followed by polymerization of the unpolymerized portion. In this case, the optically anisotropic body having a plurality of regions having different alignment directions can be produced.

The optically anisotropic body having a plurality of regions having different alignment directions can also be produced as follows. When only a specified portion is polymerized by ultraviolet irradiation using a mask, an electric field, a magnetic field, a temperature, or the like is applied to the polymerizable liquid crystal composition in an unpolymerized state in order to regulate alignment, and then, while this state is maintained, polymerization is performed by irradiation on the mask.

The optically anisotropic body produced by polymerizing the polymerizable liquid crystal composition of the present invention can be used as an optically anisotropic single body separated from the substrate or directly used as an optically anisotropic body without being separated from the substrate. In particular, the optically anisotropic body causes little contamination of other members, and thus it is useful for use as a coating layer substrate or use by lamination with another substrate.

### (Retardation film)

The retardation film of the present invention is produced by the same method as the optically anisotropic body of the present invention. When the polymerizable compound represented by the general formula (I) in the polymerizable liquid crystal composition is polymerized in a planar alignment state, the retardation film having in-plane birefringence with respect to the substrate can be produced. The retardation film can be used as a homogeneous liquid crystal film. When the polymerizable compound represented by the general formula (I) and the polymerizable chiral compound in the polymerizable liquid crystal composition are polymerized in a planar alignment state, the retardation film having out-of-plane birefringence with respect to the substrate can be produced. When the polymerizable compound represented by the general formula (I) in the polymerizable liquid crystal composition containing a polymerizable discotic compound is polymerized in a planar alignment state, the retardation film having in-plane and out-of-plane birefringence with respect to the substrate can be produced.

When the substrate has a retardation, it is possible to produce the retardation film having birefringence corresponding to the sum of the birefringence possessed by the substrate and the birefringence of the retardation film of the present invention. In the retardation film, the birefringence possessed by the substrate and the birefringence possessed by the retardation film may be in the same in-plane direction or different directions of the substrate. The retardation film is applied in a form suitable for application according to applications such as a liquid crystal device, a display, an optical element, an optical component, a coloring agent, security marking, a member for laser emission, an optical film, a compensation film, and the like.

### (Patterned retardation film)

Like in the optically anisotropic body of the present invention, a patterned retardation film of the present invention is produced by laminating in order a substrate, an alignment film, and a polymer of the polymerizable liquid crystal composition, and patterning is performed so as to obtain a portion with different retardation in a polymerization step. Patterning may be linear patterning, lattice-form patterning, circular patterning, polygonal patterning, or the like in different directions. The patterned retardation film is applied according to applications such as a liquid crystal device, a display, an optical element, an optical component, a coloring agent, security marking, a member for laser emission, an optical film, a compensation film, and the like.

A method for forming a portion with a different retardation includes providing an alignment film on the substrate and performing alignment treatment so as to cause patterning alignment of the polymerizable composition when the polymerizable composition solution of the present invention is applied and dried. Examples of such alignment treatment include fine-rubbing treatment, polarized ultraviolet/visible light irradiation through a mask, micro-shape processing, and the like. Examples of the alignment film include compounds such as polyimide, polysiloxane, polyamide, polyvinyl alcohol, polycarbonate, polystyrene, polyphenylene ether, polyarylate, polyethylene terephthalate, polyethersulfone, epoxy resins, epoxyacrylate resins, acrylic resins, coumarin compounds, chalcone compounds, cinnamate compounds, fulgide compounds, anthraquinone compounds, azo compounds, arylethene compounds, and the like. A compound subjected to alignment treatment by fine rubbing is preferably such that crystallization of the material used is accelerated by alignment treatment or a heating step added after alignment treatment. A compound subjected to alignment treatment other than rubbing is preferably a photo-alignment material.

### EXAMPLES

The present invention is described below by giving synthesis examples, examples, and comparative examples, but the present invention is not limited to these examples. In addition, "parts" and "%" are on a mass basis unless otherwise specified.

### (Preparation of polymerizable liquid crystal composition)

Each of compounds represented by formula (D-1) to formula (D-7), a compound represented by formula (E-1), a compound represented by formula (F-1), and a compound represented by formula (G-1) was mixed at a ratio shown in Table 1 relative to 100 parts by mass of a total amount of compounds represented by formula (A-1) to formula (A-7), formula (B-1) to formula (B-7), and formula (C-1) and formula (C-2) shown in Table 1 so that the total amount of compounds represented by the formula (A-1) to the formula (A-6), the formula (B-1) to the formula (B-7), the formula (C-1) and the formula (C-2), the formula (D-1) to the formula (D-7), and the formulae (E-1), (F-1), and (G-1) is 25% by mass in a polymerizable liquid crystal composition using methyl ethyl ketone (MEK) (H-1) as an organic solvent, preparing a polymerizable liquid crystal composition (MEK: 75% by mass).

### (Preparation of polymerizable liquid crystal composition (1))

As shown in Table 1, 3 parts by mass of a compound represented by formula (D-1), 5 parts by mass of a polymerization initiator (E-1), 0.1 parts by mass of methyl hydroquinone (MEHQ) (F-1), and 0.1 parts by mass of a surfactant (G-1) were used relative to 100 parts by mass of a total of 20 parts by mass of a compound represented by formula (A-3), 20 parts by mass of a compound represented by formula (A-5), 25 parts by mass of a compound represented by formula (B-3), and 35 parts by mass of a compound represented by formula (B-4) so that the total amount of these compounds is 25% by mass using MEK (H-1) as an organic solvent, stirred by using a stirrer having a stirring propeller for 1 hour under conditions including a stirring speed of 500 rpm and a solution temperature of 60°C, and then filtered with a membrane filter of 0.2 µm, preparing a polymerizable liquid crystal composition (1).

### (Preparation of polymerizable liquid crystal compositions (2) to (23) and comparative polymerizable liquid crystal compositions (24) to (27))

Like in preparation of the polymerizable liquid crystal composition (1) of the present invention, each of polymerizable liquid crystal compositions (2) to (23) and comparative polymerizable liquid crystal compositions (24) to (27) was prepared under the same conditions as for preparing the polymerizable liquid crystal composition (1) except that the ratio of each of compounds represented by formula (A-1) to formula (A-7), formula (B-1) to formula (B-7), formula (C-1) and formula (C-2), and formula (D-1) to formula (D-7), a polymerization initiator (E-1), a polymerization inhibitor (F-1), and a surfactant (G-1) shown in Table 1 was changed as shown in Table 1.

Table 1 shows specific compositions of the polymerizable liquid crystal compositions (1) to (23) and the comparative polymerizable liquid crystal compositions (24) to (27).

**[Table 1]**

| Composition | (1) | (2) | (3) | (4) | (5) | (6) | (7) | (8) | (9) | (10) | (11) | (12) | (13) |
|---|---|---|---|---|---|---|---|---|---|---|---|---|---|
| (A-1) | | | | | | | | | | | | 43 | 43 |
| (A-2) | | | | | | | | | | | | 43 | 43 |
| (A-3) | 20 | 20 | 20 | 20 | 20 | 20 | 20 | 20 | 34 | 49 | 40 | | |
| (A-4) | | | | | | | | | | | | | |
| (A-5) | 20 | 20 | 20 | 20 | 20 | 20 | 20 | 20 | 10 | 11 | | | |
| (A-6) | | | | | | | | | | | | | |
| (A-7) | | | | | | | | | | | | | |
| (B-1) | | | | | | | | | | | | 14 | 14 |
| (B-2) | | | | | | | | | | | | | |
| (B-3) | 25 | 25 | 25 | 25 | 25 | 25 | 25 | 25 | 28 | 7 | 20 | | |
| (B-4) | 35 | 35 | 35 | 35 | 35 | 35 | 35 | 35 | | 10 | 40 | | |
| (B-5) | | | | | | | | | 28 | 12 | | | |
| (B-6) | | | | | | | | | | | | | |
| (B-7) | | | | | | | | | | | | | |
| (C-1) | | | | | | | | | | 11 | | | |
| (C-2) | | | | | | | | | | | | | |
| (D-1) | 3 | | | | | 2 | 1 | 0.5 | 1.5 | 1.5 | 1.5 | 3 | |
| (D-2) | | 1.5 | | | | | | | | | | | 1.5 |
| (D-3) | | | 1.5 | | | | | | | | | | |
| (D-4) | | | | 1.5 | | | | | | | | | |
| (D-5) | | | | | 1.5 | | | | | | | | |
| (D-6) | | | | | | | | | | | | | |
| (D-7) | | | | | | | | | | | | | |
| (E-1) | 5 | 5 | 5 | 5 | 5 | 5 | 5 | 5 | 5 | 5 | 5 | 3 | 3 |
| (F-1) | 0.1 | 0.1 | 0.1 | 0.1 | 0.1 | 0.1 | 0.1 | 0.1 | 0.1 | 0.1 | 0.1 | 0.1 | 0.1 |
| (G-1) | 0.1 | 0.1 | 0.1 | 0.1 | 0.1 | 0.1 | 0.1 | 0.1 | 0.1 | 0.1 | 0.01 | 0.1 | 0.1 |
| (H-1) | 75 | 75 | 75 | 75 | 75 | 75 | 75 | 75 | 75 | 75 | 75 | 75 | 75 |

**[Table 2]**

| Composition | (14) | (15) | (16) | (17) | (18) | (19) | (20) | (21) | (22) | (23) | (24) | (25) | (26) | (27) |
|---|---|---|---|---|---|---|---|---|---|---|---|---|---|---|
| (A-1) | 38 | 28 | 35.5 | 35.5 | 15 | | | | 50 | 43 | | | | 15 |
| (A-2) | 38 | 28 | 35.5 | 35.5 | 45 | | | | 50 | 33 | | | | 45 |
| (A-3) | | 10 | | | | 37.5 | 10 | 39 | | | 20 | 20 | 20 | |
| (A-4) | | | | | | 37.5 | 10 | 30 | | | | | | |
| (A-5) | 10 | 20 | 15 | 15 | | | | | | | 20 | 20 | 20 | |
| (A-6) | | | | | 30 | | | | | | | | | 40 |
| (A-7) | | | | | | | | | | 10 | | | | |
| (B-1) | 14 | 14 | | | 10 | 5 | 5 | | | 14 | | | | |
| (B-2) | | | 14 | 14 | | | | | | | | | | |
| (B-3) | | | | | | | | | | | 25 | 25 | 25 | |
| (B-4) | | | | | | | | | | | 35 | 35 | 35 | |
| (B-5) | | | | | | | | | | | | | | |
| (B-6) | | | | | | 10 | 37.5 | | | | | | | |
| (B-7) | | | | | | 10 | 37.5 | 23 | | | | | | |
| (C-1) | | | | | | | | | | | | | | |
| (C-2) | | | | | | | | 8 | | | | | | |
| (D-1) | 3 | 3 | 3 | 3 | 3 | 1.5 | 1.5 | 1.5 | 3 | 1.5 | | | | 3 |
| (D-2) | | | | | | | | | | | | | | |
| (D-3) | | | | | | | | | | | | | | |
| (D-4) | | | | | | | | | | | | | | |
| (D-5) | | | | | | | | | | | | | | |
| (D-6) | | | | | | | | | | | | 3 | | |
| (D-7) | | | | | | | | | | | | | 3 | |
| (E-1) | 3 | 3 | 3 | 3 | 3 | 5 | 5 | 5 | 3 | 3 | 5 | 5 | 5 | 3 |
| (F-1) | 0.1 | 0.1 | 0.1 | 0.1 | 0.1 | 0.1 | 0.1 | 0.1 | 0.1 | 0.1 | 0.1 | 0.1 | 0.1 | 0.1 |
| (G-1) | 0.1 | 0.1 | 0.1 | 0.1 | 0.1 | 0.1 | 0.1 | 0.1 | 0.01 | 0.1 | 0.1 | 0.1 | 0.1 | 0.1 |
| (H-1) | 75 | 75 | 75 | 75 | 75 | 75 | 75 | 75 | 75 | 75 | 75 | 75 | 75 | 75 |

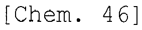

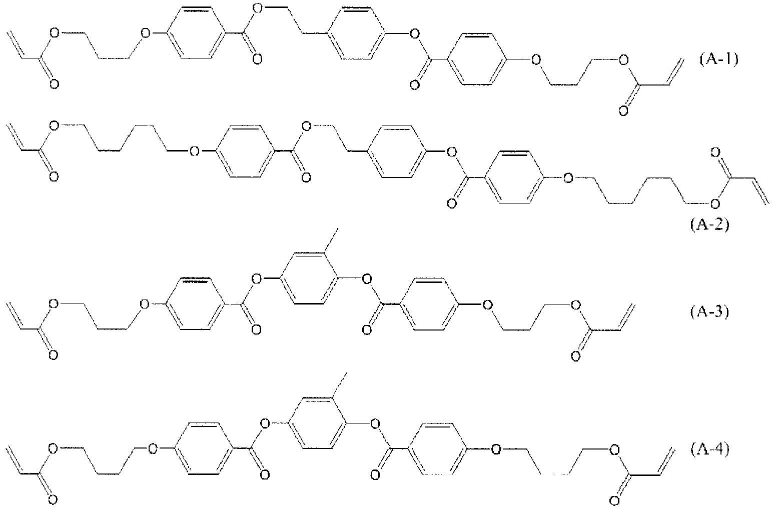

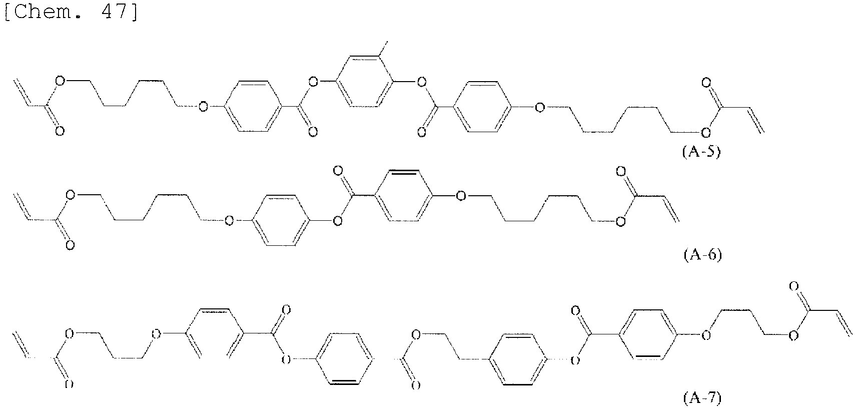

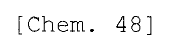

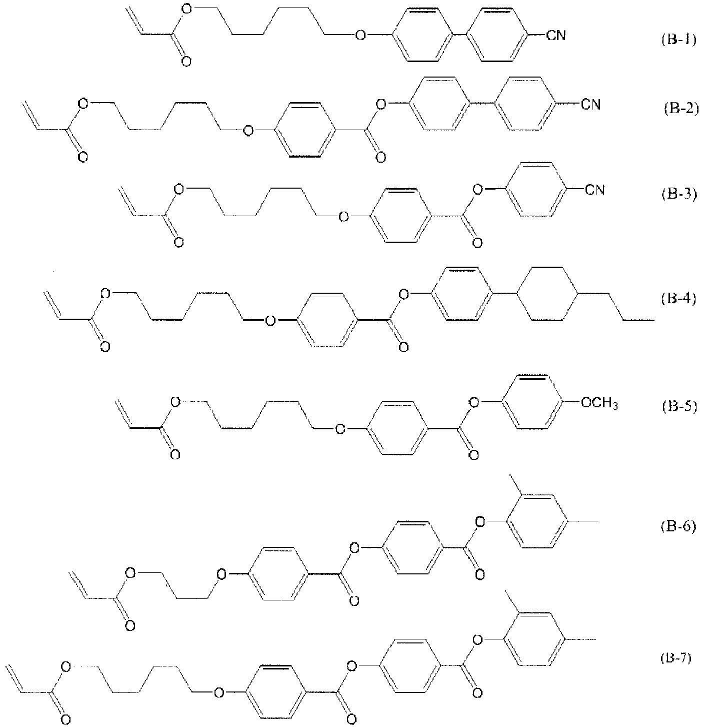

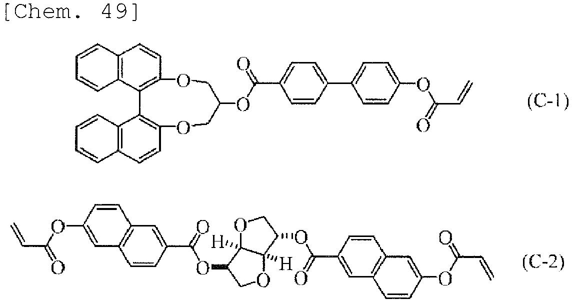

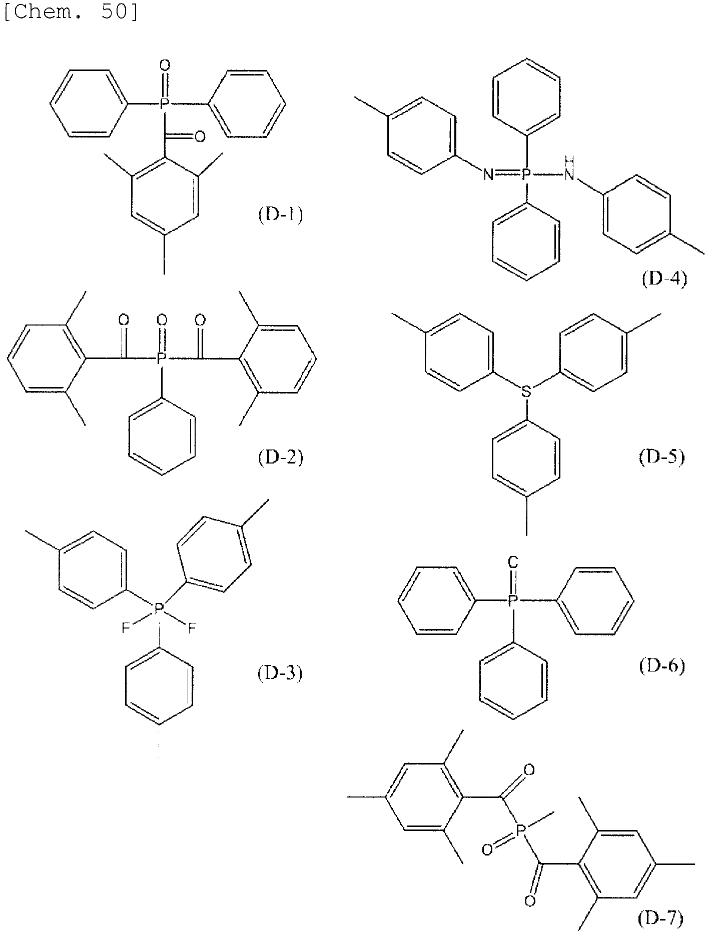

Irgacure 907 (E-1)
MEHQ (F-1)
Megaface F-554 (G-1)

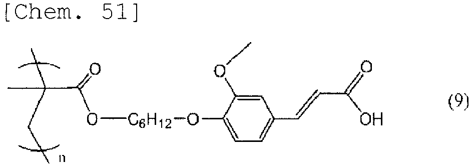

### (EXAMPLE 1)

### (Adhesion)

### <Formation of thin film for adhesion evaluation>

A silane coupling material (manufactured by JNC: DMOAP) for a vertical alignment film was applied by a spin coating method on a COP substrate used as a substrate, and then fired at 100°C for 1 hour to produce a substrate. The polymerizable liquid crystal composition (1) prepared as described above was applied on the resultant substrate by using a bar coater #5 at room temperature and dried at 60°C for 2 minutes. Then, the substrate was allowed to stand for 25°C for 1 minute and irradiated with UV light by using a conveyor-type high-pressure mercury lamp with an illuminance set to 200 mJ/cm², thereby producing a thin film of Example 1.

### <Evaluation of adhesion>

The thin film (coating film) formed as described above was cut in a grid-like form with a cutter by using a crosscut method using a cutter according to JIS K5600-5-6 to form 2-mm squares, and then adhesion of the coating film was measured.
Class 0: No peeling was observed in any one of the squares.
Class 1: Slight peeling was observed at a cut intersection in the coating film (less than 5%).
Class 2: Peeling was observed at an intersection along a cutting line in the coating film (5% or more and less than 15%).
Class 3: Peeling was partially or entirely observed along a cutting line in the coating film (15% or more and less than 35%).
Class 4: Large peeling was partially or entirely observed along a cutting line in the coating film (35% or more and less than 65%).
Class 5: Higher than class 4 (65% or more).

### (Measurement of haze)

The thin film formed for the adhesion evaluation test described above was measured at three points by using a turbidity meter NDH2000 manufactured by Nippon Denshoku Industries Co., Ltd., and an average value was evaluated.
A: Less than 0.1
B: 0.1 or more and less than 0.2
C: 0.2 or more and less than 0.5
D: 0.5 or more

### (Durability)

The thin film formed for the adhesion evaluation test described above was heated at 85°C for 500 hours to prepare a thin film for durability measurement.

### <(Rate) of change in retardation>

A retardation Re of incident light of θ = 50° was measured before and after the heating test by using RETS-100 manufactured by Otsuka Electronics Co., Ltd. (wavelength: 550 nm), and a rate of change in retardation after heating was evaluated when the retardation before heating was 100%.
A: No change
B: Decrease of less than 3%
C: Decrease of 3% or more and less than 7%
D: Decrease of 7% or more

The obtained results are shown in a table below.

**[Table 3]**

| | Solution | Adhesion | Haze | Durability |
|---|---|---|---|---|
| Example 1 | Solution (1) | 0 | A | A |
| Example 2 | Solution (2) | 0 | A | A |
| Example 3 | Solution (3) | 0 | B | A |
| Example 4 | Solution (4) | 0 | B | B |
| Example 5 | Solution (5) | 0 | B | B |
| Example 6 | Solution (6) | 0 | A | A |
| Example 7 | Solution (7) | 0 | A | A |
| Example 8 | Solution (8) | 0 | A | B |
| Example 9 | Solution (9) | 0 | A | A |
| Example 10 | Solution (10) | 0 | A | A |
| Example 11 | Solution (11) | 0 | A | A |
| Example 12 | Solution (12) | 0 | A | A |
| Example 13 | Solution (13) | 0 | A | A |
| Example 14 | Solution (14) | 0 | A | A |
| Example 15 | Solution (15) | 0 | A | A |
| Example 16 | Solution (16) | 0 | A | A |
| Example 17 | Solution (17) | 0 | A | A |
| Example 18 | Solution (18) | 0 | A | A |
| Example 19 | Solution (19) | 0 | A | A |
| Example 20 | Solution (20) | 0 | A | B |
| Example 21 | Solution (21) | 0 | A | A |
| Example 22 | Solution (22) | 0 | A | A |
| Example 23 | Solution (23) | 0 | A | A |
| ComparativeExample 1 | Solution (24) | 0 | A | D |
| ComparativeExample 2 | Solution (25) | 1 | B | C |
| ComparativeExample 3 | Solution (26) | 1 | A | C |
| ComparativeExample 4 | Solution (27) | 1 | A | A |

### (EXAMPLES 2 to 23 and COMPARATIVE EXAMPLES 1 to 4)

A thin film was formed by using each of the polymerizable liquid crustal compositions (2) to (27), and adhesion, haze, and durability were measured. The results are shown as Examples 2 to 23 and Comparative Examples 1 to 4 in the above table.

Like in Example 1, in Example 2 to Example 8, Example 12 to Example 18, Example 23, and Comparative Examples 1 to 4, a substrate prepared by laminating a silane coupling vertical alignment film on a COP substrate was used as a substrate for a thin film for adhesion evaluation or the like. The application and curing conditions of the polymerizable liquid crystal composition were the same as in Example 1, that is, conditions in which each of the polymerizable liquid crystal compositions was applied using a bar coater #5 at room temperature, dried at 60°C for 2 minutes, and then allowed to stand for 25°C for 1 minute, and irradiated with UV light by using a conveyor-type high-pressure mercury lamp with an illuminance set to 200 mJ/cm². In measurement of a (rate) of change in retardation, a retardation Re of incident light of θ = 50° was measured before and after the heating test by using RETS-100 manufactured by Otsuka Electronics Co., Ltd. (wavelength: 550 nm), and a rate of change in retardation after heating was evaluated when the retardation before heating was 100%.

Also, in Example 9, Example 11, Example 19, Example 20, and Example 22, a substrate for a thin film for adhesion evaluation was prepared by applying a solution containing a photo-alignment polymer represented by the formula (9) on a TAC substrate by using a spin coater, and drying at 80°C for 1 minute to form a coating film having a dry thickness of 40 nm. The coating film was irradiated with linearly polarized and parallel visible/ultraviolet light (irradiation intensity: 20 mW/cm²) near a wavelength of 365 nm in a direction vertical to the substrate using a superhigh-pressure mercury lamp through a wavelength cut filter, a bandpass filter, and a polarization filter (accumulated quantity of light: 100 mJ/cm²). The resultant photo-aligned film was used. The application and curing conditions of the polymerizable liquid crystal composition were those in which each of the polymerizable liquid crystal compositions was applied using a bar coater #4 at room temperature, dried at 60°C for 2 minutes, then allowed to stand for 25°C for 1 minute, and irradiated with UV light by using a conveyor-type high-pressure mercury lamp with an illuminance set to 200 mJ/cm². In measurement of a (rate) of change in retardation, a front surface retardation Re was measured before and after the heating test by using RETS-100 manufactured by Otsuka Electronics Co., Ltd. (wavelength: 550 nm). A rate of change in retardation after heating was evaluated when the retardation before heating was 100%.

Further, in Example 10 and Example 21, a substrate for a thin film for adhesion evaluation was prepared by laminating a polyimide alignment film subjected to rubbing treatment on a glass substrate. The application and curing conditions of the polymerizable liquid crystal composition were those in which each of the polymerizable liquid crystal compositions was applied using a bar coater #12 at room temperature, dried at 60°C for 2 minutes, then allowed to stand for 25°C for 1 minute, and irradiated with UV light by using a conveyor-type high-pressure mercury lamp with an illuminance set to 400 mJ/cm². In measurement of a (rate) of change in retardation, a retardation Re of incident light θ = 45° was measured before and after the heating test by using RETS-100 manufactured by Otsuka Electronics Co., Ltd. (wavelength: 550 nm). A rate of change in retardation after heating was evaluated when the retardation before heating was 100%.

As a result, each of the polymerizable liquid crystal compositions (Examples 1 to 23) using a durability-imparting agent represented by the formula (D-1) to the formula (D-5) can produce an optically anisotropic body having significantly improved durability, small haze, excellent alignment, and good adhesion to the substrate as compared with the polymerizable liquid crystal composition (Comparative Example 1) not containing the durability-imparting agent. On the other hand, the polymerizable liquid crystal composition containing a compound having three or more aromatic rings which do not have a substituent composed of an alkyl group and/or an alkoxy group can produce only an optically anisotropic body having lower durability than that produced in each of the examples.

## Claims

1. A polymerizable liquid crystal composition comprising at least one polymerizable liquid crystal compound (I) having one polymerizable functional group in its molecule, at least one polymerizable liquid crystal compound (II) having two polymerizable functional groups in its molecule, and at least one compound (III) having tree or more aromatic rings at least one of which is substituted by an alkyl group having 1 to 5 carbon atoms or an alkoxy group having 1 to 5 carbon atoms.

2. The polymerizable liquid crystal composition according to Claim 1, wherein the compound (III) is a compound having a phosphorus atom or a sulfur atom.

3. The polymerizable liquid crystal composition according to Claim 1 or 2, wherein the compound (III) is at least one compound selected from the group consisting of compounds represented by general formula (III-1-1) or general formula (III-1-2) below, 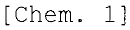 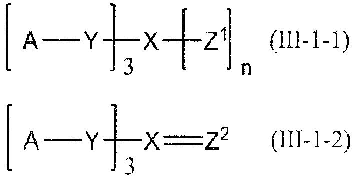
(in the formulae, X represents a phosphorus atom or a sulfur atom,
n represents 0 or 2, when X is a phosphorus atom, n represents 2, and when X is a sulfur atom, n represents 0,
Y represents -CO-, -NH-, -O-, or a single bond, and when a plurality of Y are present, Y may be the same or different,
A represents an aromatic ring which may have a substituent, and when a plurality of A are present, A may be the same or different, but at least one of A is a group in which at least one hydrogen atom is substituted by an alkyl group having 1 to 5 carbon atoms or an alkoxy group having 1 to 5 carbon atoms, and
Z¹ represents a fluorine atom, and Z² represents an oxygen atom or a NH group in which a hydrogen atom in the NH group is substituted by an aromatic ring which may have a substituent).

4. The polymerizable liquid crystal composition according to Claim 3, comprising as a compound represented by the general formula (III-1-1) or the general formula (III-1-2), at least one compound selected from the group consisting of compounds represented by general formula (III-2-1), general formula (III-2-2), or general formula (III-2-3) below, 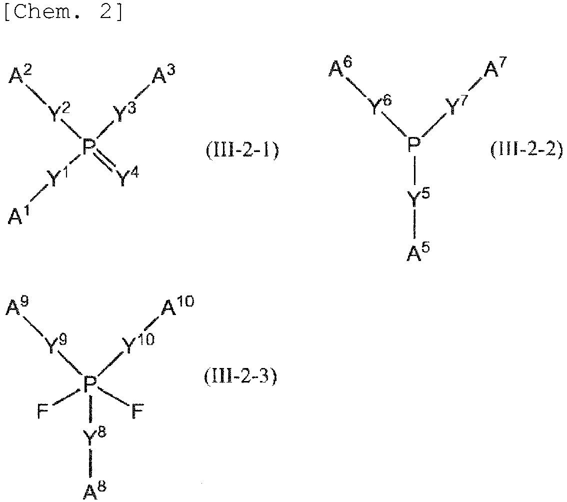
(in the formulae, P represents a phosphorus atom,
Y⁴ represents a NH group, a nitrogen atom, or an oxygen atom (wherein when Y⁴ represents a NH group, a hydrogen atom in the NH group may be substituted by an aromatic ring A⁴ which may have a substituent),
Y¹ to Y³, Y⁵ to Y⁷, and Y⁸ to Y¹⁰ each independently represent -CO-, -NH-, -O-, or a single bond,
A¹ to A¹⁰ each independently represent an aromatic ring which may have a substituent, at least one of A¹ to A⁴ is an aromatic ring in which at least one hydrogen atom in a =CH-group of the aromatic ring is substituted by an alkyl group having 1 to 5 carbon atoms or an alkoxy group having 1 to 5 carbon atoms, at least one of A⁵ to A⁷ is an aromatic ring in which at least one hydrogen atom in a =CH- group of the aromatic ring is substituted by an alkyl group having 1 to 5 carbon atoms or an alkoxy group having 1 to 5 carbon atoms, and at least one of A⁸ to A¹⁰ is an aromatic ring in which at least one hydrogen atom in a =CH- group of the aromatic ring is substituted by an alkyl group having 1 to 5 carbon atoms or an alkoxy group having 1 to 5 carbon atoms).

5. The polymerizable liquid crystal composition according to any one of Claims 1 to 4, wherein the polymerizable liquid crystal compound (I) having one polymerizable functional group in its molecule is a compound represented by general formula (I-1) below,
[Chem. 3]
**P²-(S¹-X¹)_{q1}-MG-R²¹** **(I-1)**
(in the formula, P² represents a polymerizable functional group; S¹ represents an alkylene group having 1 to 18 carbon atoms in which one -CH₂- or two or more unadjacent -CH₂- in the alkylene group may be each independently substituted by -O-, -COO-, -OCO-, or -OCO-O-, and one or two or more hydrogen atoms possessed by the alkylene group may be each substituted by a halogen atom or a CN group; X¹ represents -O-, -S-, -OCH₂-, -CH₂O-, -CO-,-COO-, -OCO-, -CO-S-, -S-CO-, -O-CO-O-, -CO-NH-, -NH-CO-,-SCH₂-, -CH₂S-, -CF₂O-, -OCF₂-, -CF₂S-, -SCF₂-, -CH=CH-COO-,-CH=CH-OCO-, -COO-CH=CH-, -OCO-CH=CH-, -COO-CH₂CH₂-, -OCO-CH₂CH₂-, -CH₂CH₂-COO-, -CH₂CH₂-OCO-, -COO-CH₂-, -OCO-CH₂-,-CH₂-COO-, -CH₂-OCO-, -CH=CH-, -N=N-, -CH=N-N=CH-, -CF=CF-,-C≡C-, or a single bond (wherein P²-S¹ and S¹-X¹ do not contain -O-O-, -O-NH-, -S-S-, and -O-S- groups); q1 represents 0 or 1; MG represents a mesogenic group; R²¹ represents a hydrogen atom, a halogen atom, a cyano group, a linear or branched alkyl group having 1 to 12 carbon atoms, or a linear or branched alkenyl group having 1 to 12 carbon atoms, in which one -CH₂- or two or more unadjacent -CH₂- in the alkyl and alkenyl group may be each independently substituted by -O-, -S-, -CO-, -COO-, -OCO-, -CO-S-, -S-CO-, -O-CO-O-, -CO-NH-, -NH-CO-, -NH-, -N(CH₃)-, -CH=CH-COO-, -CH=CH-OCO-, -COO-CH=CH-, -OCO-CH=CH-, -CH=CH-, -CF=CF-, or -C≡C-, and one or two or more hydrogen atoms possessed by the alkyl group and alkenyl group may be each independently substituted by a halogen atom or a cyano group, and when a plurality of hydrogen atoms are substituted, the substituents may be the same or different).

6. The polymerizable liquid crystal composition according to any one of Claims 1 to 5, wherein the polymerizable liquid crystal compound (II) having two polymerizable functional groups in its molecule is a compound represented by general formula (II-1) below,
[Chem. 4]
**P²-(S¹-X¹)_{q1}-MG-(X²-S²)_{q2}-P³** **(II-1)**
(in the formula, P² and P³ each independently represent a polymerizable functional group; S¹ and S² each independently represent an alkylene group having 1 to 18 carbon atoms in which one -CH₂- or two or more unadjacent - CH₂- in the alkylene group may be each independently substituted by -O-, -COO-, -OCO-, or -OCO-O-, and one or two or more hydrogen atoms possessed by the alkylene group may be each substituted by a halogen atom or a CN group; X¹ and X² each independently represent -O-, -S-, -OCH₂-, -CH₂O-,-CO-, -COO-, -OCO-, -CO-S-, -S-CO-, -O-CO-O-, -CO-NH-, -NH-CO-, -SCH₂-, -CH₂S-, -CF₂O-, -OCF₂-, -CF₂S-, -SCF₂-, -CH=CH-COO-, -CH=CH-OCO-, -COO-CH=CH-, -OCO-CH=CH-, -COO-CH₂CH₂-,-OCO-CH₂CH₂-, -CH₂CH₂-COO-, -CH₂CH₂-OCO-, -COO-CH₂-, -OCO-CH₂-, -CH₂-COO-, -CH₂-OCO-, -CH=CH-, -N=N-, -CH=N-N=CH-, -CF=CF-, -C≡C-, or a single bond (wherein P²-S¹, P³-S², S¹-X¹, and S²-X² do not contain -O-O-, -O-NH-, -S-S-, and -O-S- groups); q1 and q2 each independently represent 0 or 1; and MG represents a mesogenic group).

7. A polymer produced by polymerizing the polymerizable liquid crystal composition according to any one of Claims 1 to 6.

8. An optically anisotropic body comprising the polymerizable liquid crystal composition according to any one of Claims 1 to 6.

9. A retardation film comprising the polymerizable liquid crystal composition according to any one of Claims 1 to 6.

10. A patterned retardation film comprising the polymerizable liquid crystal composition according to any one of Claims 1 to 6.

11. A brightness enhancement film comprising the polymerizable liquid crystal composition according to any one of Claims 1 to 6.

12. An anti-reflection film comprising the polymerizable liquid crystal composition according to any one of Claims 1 to 6.
